# FASCICULE DE BREVET EUROPEEN

(11) **EP 3 565 868 B1**
(45) Date de publication et mention de la délivrance du brevet: **03.02.2021**
(21) Numéro de dépôt: 17823159.3
(22) Date de dépôt: 22.12.2017
(51) Int. Cl.: C10G 1/08

(54) **PROCÉDÉ ET DISPOSITIF DE PRODUCTION DE PRODUITS ÉNERGÉTIQUES PAR CRAQUAGE CATALYTIQUE D'UN MATÉRIAU SOLIDE HYDROCARBONÉ SANS FORMATION DE COKE**
VERFAHREN UND VORRICHTUNG ZUR HERSTELLUNG VON ENERGIEPRODUKTEN DURCH KATALYTISCHE SPALTUNG EINES FESTEN KOHLENWASSERSTOFFMATERIALS OHNE KOKSBILDUNG
METHOD AND DEVICE FOR PRODUCING ENERGY PRODUCTS BY CATALYTIC CRACKING OF A SOLID HYDROCARBON MATERIAL WITHOUT COKE FORMATION

(30) Priorité: 03.01.2017 FR 1750037
(43) Date de publication de la demande: 13.11.2019
(73) Titulaire: D.M.S, 31000 Toulouse (FR)
(72) Inventeur: DUMONS, Pierre, 31000 Toulouse (FR)
(74) Mandataire: BARRE LAFORGUE
(86) Numéro de dépôt international: PCT/EP2017/084512
(87) Numéro de publication internationale: WO 2018/127438

(56) Documents cités:
- WO-A1-2009/066251
- US-A1- 2005 115 871
- US-A1- 2009 267 349

## Description

L'invention concerne un procédé et un dispositif de production de produits énergétiques -notamment de carburant- par craquage catalytique d'un matériau -notamment d'un déchet- solide hydrocarboné sans formation de coke. L'invention concerne en particulier un procédé et un dispositif de production d'hydrocarbures, dits « carburant », « diesel » ou « kérosène », à chaînes courtes -comprenant un nombre d'atomes de carbone compris entre 1 (CH4) et 18 (C₁₈H₃₈)-, aptes et destinés à une utilisation à titre de carburant pour moteur diesel ou pour turboréacteur ou turbocompresseur. L'invention concerne un tel procédé et un tel dispositif permettant de valoriser un déchet contenant de la biomasse.

Dans tout le texte :
- l'expression « matériau hydrocarboné » désigne un matériau comprenant au moins un composé hydrocarboné, c'est-à-dire un composé formé pour l'essentiel d'atomes de carbone et d'atomes d'hydrogène. Un tel matériau hydrocarboné peut également comprendre d'autres éléments choisis, par exemple, parmi au moins un atome d'oxygène, au moins un atome d'azote, au moins un atome de phosphore, au moins un atome de soufre et/ou au moins un atome d'un halogène, etc. L'expression « matériau hydrocarboné » désigne en particulier un matériau comprenant de la biomasse ;
- le terme « déchet » désigne la partie en pratique non utilisée d'une matière, nécessitant un stockage et/ou un retraitement approprié en vue de son stockage. Il peut s'agir par exemple de déchet industriel, de déchet agricole -telles que des parties non valorisées de plantes- ou de déchet ménager de composition complexe.

On connait des procédés de production de carburant par craquage catalytique d'un déchet hydrocarboné. Par exemple, on connait de US2009/267349 un dispositif de conversion d'un déchet en carburant, comprenant un organe d'échange de chaleur avec une dispersion du déchet dans une huile inerte.

On connait également (US2005/115871) un procédé et un dispositif de craquage catalytique d'hydrocarbures d'une suspension d'un déchet hydrocarboné chauffée au moyen d'une turbine à friction à une température comprise entre 300°C et 400°C en présence de catalyseurs à base de silicates d'aluminium dopés par des métaux alcalins. Or, pour atteindre cette température à cœur de la suspension, au moins une partie de la suspension est nécessairement chauffée au contact des pales de la turbine à friction à une température - notamment à une température de l'ordre de 400°C- supérieure ou égale à la température de formation de coke. Il en résulte la formation inévitable de coke se déposant en particulier sur les pales de la turbine à friction et une perte considérable de l'efficacité du chauffage. Un arrêt complet de l'installation est alors nécessaire en vue du démontage de la turbine à friction, de sa maintenance, et/ou de sa réhabilitation.

En outre, le dispositif décrit dans ce document comprend une chambre de mise en suspension d'un déchet hydrocarboné dans de l'huile inerte, une conduite d'amenée de la suspension formée en entrée de la turbine à friction, un réservoir sous-jacent de collecte de l'huile inerte et de résidus solides. Il est complexe dans sa structure, difficile à isoler thermiquement et onéreux dans sa construction. Il ne permet pas en pratique l'établissement d'une circulation régulière du déchet hydrocarboné et de l'huile inerte dans un circuit court, entretenue par un moyen de pompage unique et fiable. Il ne permet pas non plus de limiter les déperditions de chaleur de sorte que la totalité de l'énergie nécessaire à la réaction de craquage catalytique est entièrement apportée par la turbine à friction. Il ne permet pas non plus de contrôler la combustion exothermique du dihydrogène (H₂) produit lors du craquage catalytique. Il ne permet donc pas de maitriser la température de la suspension lors du craquage catalytique, qui augmente du fait de la réaction de combustion exothermique du dihydrogène et conduit inévitablement à la formation de coke. Le procédé est également complexe dans sa mise en œuvre.

L'invention vise à pallier l'ensemble de ces inconvénients.

L'invention vise donc à proposer un procédé et un dispositif de production de produits énergétiques -notamment de carburant- par craquage catalytique d'un matériau -notamment d'un déchet- solide hydrocarboné qui soient suffisamment simples et fiables dans leur mise en œuvre et dans leur utilisation pour permettre une exploitation à l'échelle industrielle.

L'invention vise en particulier à proposer un tel procédé et un tel dispositif susceptible de pouvoir être au moins partiellement automatisés.

L'invention vise en particulier à proposer un tel procédé qui permette d'éviter la formation de coke, de dioxines et de furannes.

L'invention vise ainsi à proposer un tel procédé et un tel dispositif permettant de maintenir durablement l'efficacité du chauffage et le rendement de la réaction de craquage catalytique.

L'invention vise également à proposer un tel procédé et un tel dispositif dans lesquels les apports en énergie thermique sont minimisés et dans lesquels le bilan énergétique global de la production de produits énergétique -notamment de carburant- est optimisé.

L'invention vise également à proposer un tel procédé et un tel dispositif qui permettent de réduire le nombre, la fréquence et la durée des étapes de maintenance du dispositif de production de produits énergétique -notamment de carburant-.

L'invention vise également à proposer un procédé et un dispositif de production de produits énergétiques -notamment de carburant- par craquage catalytique d'un matériau solide hydrocarboné permettant une production de produits énergétiques -notamment de carburant- en continu.

L'invention vise en particulier à proposer un procédé et un dispositif de production de produits énergétiques -notamment de carburant- qui ne nécessitent pas l'arrêt du dispositif en vue de son rechargement en matériau solide hydrocarboné et/ou en réactifs.

L'invention vise en particulier à proposer un tel procédé et un tel dispositif adaptés pour favoriser la réactivité du matériau solide hydrocarboné aux fins de son craquage catalytique.

L'invention vise en particulier à proposer un tel dispositif qui soit de faible encombrement.

L'invention vise aussi à proposer un tel dispositif permettant de minimiser le coût de fabrication du dispositif.

L'invention vise également à proposer un tel dispositif de faible coût de construction, permettant également de minimiser le coût de production de produits énergétique -notamment de carburant-.

Pour ce faire, l'invention concerne un procédé de production de produits énergétiques tel que défini dans la revendication 1.

L'invention concerne donc un procédé de production de produits énergétiques -notamment de carburant- par craquage catalytique d'au moins un -notamment de chaque- composé hydrocarboné d'un matériau solide à l'état divisé excluant la formation de coke, de dioxines et de furannes.

Avantageusement, dans un mode de réalisation d'un procédé selon l'invention, lesdits hydrocarbures à chaînes courtes sont des hydrocarbures comprenant un nombre d'atomes de carbone compris entre 1 et 18. En particulier, lesdits hydrocarbures à chaîne courte sont des hydrocarbures à chaîne hydrocarbonée comprenant un nombre d'atomes de carbone compris entre 1 (CH₄) et 18 (C₁₈H₃₈).

Les inventeurs ont observé que le mélange :
- d'une quantité de ladite dispersion de craquage portée à une température inférieure à la température de craquage (la température de craquage étant comprise entre 240°C et 340°C -notamment entre 280°C et 340°C- selon le matériau solide à l'état divisé) et inférieure à toute température de formation de coke (c'est-à-dire inférieure à 400°C en absence de tout dépôt de coke et/ou de suie préalable, mais inférieure à 360°C en présence d'un tel dépôt de coke et/ou de suie) et sans avoir recours à un échange de chaleur par conduction avec une paroi chaude à une température supérieure à la température de formation de coke, et qui ne permet donc ni le craquage de composé(s) hydrocarboné(s) du matériau solide à l'état divisé ni la formation de coke, et ;
- d'une quantité de liquide inerte porté à une température supérieure à la température de craquage, mais qui ne permet pas la formation de coke dès lors que le liquide inerte est exempt de matériau solide à l'état divisé et de catalyseur et que sa température est inférieure à la température de 360°C ;
permet en réalité, en contrôlant les quantités (et/ou les débits) de ladite dispersion de craquage et de liquide inerte et leurs températures respectives, de former des produits énergétiques -notamment du carburant- sans former de coke, ni de dioxines ni de furannes.

Dans un procédé selon l'invention, par ce mélange on chauffe ladite dispersion de craquage à une température comprise entre 240°C et 340°C -notamment entre 280°C et 340°C- (selon le matériau solide à l'état divisé) provoquant le craquage mais sans former de dépôt de coke sur une surface chauffante d'un dispositif chauffant et sans perte de performance de ce dispositif chauffant.

Avantageusement, avant ledit mélange, ladite dispersion de craquage est à une température inférieure à la température de formation de coke. Avantageusement, ledit mélange est réalisé de façon à atteindre une température au moins égale à ladite température de craquage et inférieure à la température de formation de coke. Avantageusement, ladite température de craquage est inférieure à la température de formation de dioxine et inférieure à la température de formation de furanne.

Dans un procédé selon l'invention, contrairement aux procédés connus, on ne met pas ladite dispersion de craquage en contact avec une surface chauffante d'un dispositif de chauffage dont la température est nécessairement supérieure ou égale à 360°C -notamment supérieure ou égale à 400°C- pour pouvoir chauffer ladite dispersion de craquage et qu'elle atteigne à cœur une température au moins égale à la température de craquage (qui est elle-même comprise entre 240°C et 340°C -notamment entre 280°C et 340°C- selon le matériau solide à l'état divisé). Dans un tel procédé connu, la dispersion de craquage est portée au contact de la surface chauffante d'un dispositif de chauffage à une température qui, pour atteindre la température de craquage comprise entre 280°C et 340°C, est nécessairement supérieure à la température de formation de coke, de dioxines et de furannes et entraine la formation de coke, de dioxines et de furannes.

Avantageusement et selon l'invention, le liquide inerte comprend au moins une huile minérale, en particulier au moins une huile minérale inerte vis-à-vis du craquage catalytique et stable à la température de craquage. Avantageusement et selon l'invention, le liquide inerte est formé d'une huile minérale. Avantageusement, le liquide inerte est liquide à la température de craquage. Avantageusement, le liquide inerte est également liquide à température ambiante. Le liquide inerte est de densité inférieure à la densité du catalyseur et inférieure à la densité du matériau solide hydrocarboné. Avantageusement, selon certains modes de réalisation, l'huile minérale présente une densité de l'ordre de 0,85. Avantageusement, selon certains modes de réalisation l'huile minérale est à l'état liquide à la température de 0°C.

Avantageusement et selon l'invention, au moins un catalyseur est un catalyseur de la réaction de craquage catalytique de composés hydrocarbonés -notamment d'hydrocarbures-. Avantageusement et selon l'invention, au moins un catalyseur est choisi dans le groupe formé des silicates de potassium, des silicates de sodium, des silicates de calcium, des silicates de magnésium et d'aluminium. D'autres catalyseurs de craquage sont utilisables. De tels catalyseurs sont en outre des catalyseurs peu onéreux. Avantageusement et selon l'invention, au moins un catalyseur est un solide à l'état divisé.

Avantageusement et selon l'invention, ladite dispersion de craquage comprend au moins un composé alcalin -notamment de la chaux, ou oxyde de calcium (CaO)- en quantité adaptée pour que le pH de ladite dispersion de craquage soit supérieur à 8,5. Une telle valeur de pH permet d'une part de favoriser -notamment de permettre- la réaction de craquage catalytique d'au moins un -notamment de chaque- composé hydrocarboné du matériau solide à l'état divisé. Une telle valeur de pH permet également de limiter la corrosion des éléments du dispositif, mis en contact avec ladite dispersion de craquage. Une telle valeur de pH permet aussi de réaliser un craquage catalytique de composés hydrocarbonés chlorés. Avantageusement et selon l'invention, ladite dispersion de craquage comprend de la chaux à titre de composé alcalin.

La réaction de craquage catalytique de composés hydrocarbonés conduit à une production d'hydrocarbures à courtes chaînes à l'état gazeux à la température de craquage, de dihydrogène (H₂) à l'état gazeux, de dioxyde de carbone à l'état gazeux et de la vapeur d'eau. La réaction de craquage catalytique a pour conséquence de libérer le(s) catalyseur(s) qui est(sont) instantanément susceptible(s) de se combiner à nouveau avec au moins un composé hydrocarboné du matériau solide à l'état divisé et de former des hydrocarbures à courtes chaînes par craquage catalytique.

Ces composés à l'état gazeux formés lors de la réaction de craquage catalytique forment avec le liquide inerte une mousse en expansion dans la chambre de craquage.

À titre d'exemple uniquement, le craquage catalytique de cellulose, de formule (C₆H₉O₅)ₙ (n étant un nombre entier) conduit à la formation de 2,5n molécules de dioxyde de carbone (CO₂), 3,5 groupements méthylène (CH₂)ₙ sous forme d'hydrocarbure à chaîne courte et de n molécules de dihydrogène (H₂). Le dihydrogène produit lors de la réaction de craquage catalytique de cellulose permet :
- une hydrogénation d'hydrocarbures insaturés en hydrocarbures saturés, et ;
- une réduction du soufre libéré lors du craquage catalytique sous forme de H₂S.

Avantageusement, dans certains modes de réalisation particuliers d'un procédé selon l'invention, on soumet des ordures ménagères à une compression jusqu'à une pression supérieure à 750 bars dans des conditions propres à extraire une fraction fermentescible sous forme de pulpe humide et à former le matériau -notamment le déchet- solide hydrocarboné. On réalise, en particulier, une telle compression au moyen d'une presse à extruder, notamment telle que décrite dans EP 0 563 173.

Avantageusement, dans certains modes de réalisation particuliers d'un procédé selon l'invention, on réalise une étape préalable de fragmentation d'un matériau -notamment d'un déchet- solide hydrocarboné, de façon à former le matériau solide à l'état divisé comprenant au moins un composé hydrocarboné. On réalise une telle fragmentation par tout moyen approprié. On choisit un tel moyen de fragmentation adapté pour morceler le matériau solide hydrocarboné et former des particules de matériau solide à l'état divisé. On choisit un tel moyen de fragmentation adapté pour former des particules de matériau solide à l'état divisé sous forme de plaquettes de plus grande dimension inférieure à 20 mm et d'épaisseur de l'ordre de 3 mm ou inférieure à 3 mm. Une telle étape de fragmentation du matériau solide hydrocarboné permet de former un matériau solide à l'état divisé présentant une granulométrie adaptée pour favoriser son écoulement à l'état dispersé dans le liquide inerte et son contact avec le catalyseur aux fins de la réaction de craquage catalytique.

Avantageusement et selon l'invention, après l'étape de fragmentation, on réalise une étape de chauffage du matériau solide à l'état divisé à une température comprise entre 50°C et 100°C -notamment de l'ordre de 80°C-. Le chauffage du matériau solide à l'état divisé favorise sa dispersion ultérieure dans le liquide inerte, notamment dans le liquide inerte à une température de l'ordre de 330°C issu du recyclage de la mousse de craquage.

Avantageusement et selon une variante préférentielle d'un procédé selon l'invention, on réalise l'étape de chauffage en flux continu en introduisant un flux de matériau solide à l'état divisé dans un convoyeur à vis, à titre de dispositif de chauffage, comprenant une enveloppe adaptée pour pouvoir être portée à la température de chauffage et chauffer le matériau solide à l'état divisé.

Avantageusement selon une variante préférentielle d'un procédé selon l'invention, après l'étape de chauffage, on collecte un flux du matériau solide à l'état divisé chaud en sortie du dispositif -notamment du convoyeur- de chauffage et on dirige le flux dudit matériau solide à l'état divisé chaud dans un bain de liquide inerte chaud -notamment de liquide inerte à une température comprise entre 300°C et 330°C issu du recyclage de la mousse de craquage-. On maintient la température de cette dispersion du matériau solide à l'état divisé dans le liquide inerte à une température inférieure à la température de craquage.

Avantageusement et selon l'invention, on réalise une étape de séchage du matériau solide à l'état divisé lors de laquelle on maintient une dispersion du matériau solide à l'état divisé dans du liquide inerte -notamment du liquide inerte recyclé- à une température supérieure à 100°C -notamment à une température comprise entre 100°C et 280°C- de façon à former une dispersion d'un matériau, dit matériau sec, solide à l'état divisé comprenant au moins un composé hydrocarboné, ledit matériau sec présentant un taux d'humidité inférieur à 10% -notamment compris entre 8% et 10%- dans du liquide inerte

Avantageusement et selon l'invention, on réalise une étape de désoxygénation du matériau solide à l'état divisé lors de laquelle une dispersion du matériau solide à l'état divisé dans du liquide inerte à la température de craquage est maintenue en contact avec une atmosphère gazeuse présentant une valeur de pression partielle en oxygène inférieure à la pression partielle en oxygène de l'air atmosphérique de façon à former une dispersion désoxygénée du matériau solide à l'état divisé dans le liquide inerte.

Cette étape de désoxygénation est adaptée pour diminuer la quantité d'oxygène (O₂) moléculaire présent dans la dispersion du matériau solide à l'état divisé dans le liquide inerte. On réalise une telle désoxygénation en maintenant la dispersion du matériau solide à l'état divisé dans le liquide inerte en contact avec une atmosphère gazeuse présentant une valeur de pression partielle en oxygène inférieure à la pression partielle en oxygène de l'air atmosphérique. Par exemple, on réalise une telle désoxygénation en maintenant la dispersion du matériau solide à l'état divisé dans le liquide inerte en contact avec une atmosphère d'un gaz inerte. Rien n'empêche de réaliser une telle désoxygénation en maintenant la dispersion du matériau solide à l'état divisé dans le liquide inerte en contact avec de l'air atmosphérique à une pression inférieure à la pression atmosphérique.

Avantageusement et selon l'invention, on réalise simultanément l'étape de désoxygénation et l'étape de séchage de la dispersion dudit matériau solide à l'état divisé dans le liquide inerte et on forme une dispersion désoxygénée d'un matériau, dit matériau sec, solide à l'état divisé dans le liquide inerte, ledit matériau sec présentant un taux d'humidité inférieur à 10% -notamment compris entre 8% et 10%-.

Une telle étape de désoxygénation et de séchage est adaptée pour extraire l'humidité du matériau solide à l'état divisé sous forme de vapeur d'eau, pour condenser la vapeur d'eau formée et pour recueillir par gravité cette eau de condensation. Ainsi, le taux d'humidité du matériau solide à l'état divisé est abaissé à une valeur inférieure à 10% -notamment comprise entre 8% et 10%. On détermine le taux d'humidité du matériau solide hydrocarboné par tout moyen approprié. La désoxygénation et le séchage de la dispersion du matériau solide à l'état divisé dans le liquide inerte s'accompagne d'une diminution de sa température (en raison de la vaporisation endothermique), la température de la dispersion désoxygénée d'un matériau sec dans le liquide inerte étant inférieure à 150°C -notamment de l'ordre de 100°C à 110°C-.

Avantageusement et selon l'invention, on réalise une telle étape de désoxygénation et de séchage en flux continu en soumettant un flux de la dispersion dudit matériau solide à l'état divisé dans le liquide inerte dans un convoyeur dans lequel la pression partielle en oxygène est inférieure à la pression partielle d'oxygène de l'air atmosphérique. Avantageusement et selon l'invention, on réalise une telle étape de désoxygénation et de séchage en flux continu en soumettant un flux de la dispersion chaude dudit matériau solide à l'état divisé dans le liquide inerte dans un convoyeur dont le volume interne est en dépression, c'est-à-dire dont l'atmosphère gazeuse est à une pression inférieure à la pression atmosphérique.

Une telle étape de désoxygénation et de séchage permet de limiter à une valeur contrôlée, la quantité d'oxygène moléculaire présent dans la dispersion désoxygénée. Elle permet également de limiter en le contrôlant l'effet exothermique de la combustion de dihydrogène (H₂) au cours de la réaction ultérieure de craquage catalytique, par un apport lui-même contrôlé d'oxygène dans ladite chambre de craquage. Elle permet de minimiser la réaction incontrôlée de combustion exothermique de dihydrogène susceptible de conduire :
- à la formation aléatoire de vapeur d'eau et à une augmentation incontrôlée de la température des vapeurs dégagées lors la réaction de craquage, une telle augmentation de la température des vapeurs étant de nature à s'opposer à la condensation des produits énergétiques -notamment du carburant-, et ;
- à une augmentation incontrôlée de la température de ladite dispersion de craquage dans ladite chambre de craquage, notamment jusqu'à une température de l'ordre de 600°C (observée lorsque l'étape de désoxygénation n'est pas réalisée), température qui est incompatible avec le déroulement d'une réaction de craquage sans formation de coke.

Avantageusement, dans un mode de réalisation d'un procédé selon l'invention, on forme ladite dispersion de craquage par mise en contact et mélange :
- d'une quantité de la dispersion désoxygénée dudit matériau sec dans le liquide inerte ;
- d'une quantité d'au moins un catalyseur ;
- d'une quantité d'au moins un composé alcalin -notamment de la chaux-, et ;
- d'une quantité du liquide inerte ;
de façon à former ladite dispersion de craquage à une température inférieure à ladite température de craquage, et dans laquelle au moins un catalyseur est en contact avec au moins un -notamment avec chaque- composé hydrocarboné du matériau solide à l'état divisé. On réalise le mélange de quantités prédéterminées de ladite dispersion désoxygénée, d'au moins un catalyseur, d'au moins un composé alcalin -notamment de chaux- et de liquide inerte. On réalise cette étape de mélange par tout moyen approprié.

En particulier, avantageusement, dans un mode de réalisation préférentiel d'un procédé selon l'invention, on réalise une telle étape de mélange en flux continu dans laquelle on met en contact et on mélange :
- un flux de la dispersion désoxygénée dudit matériau sec dans le liquide inerte ;
- au moins un -notamment un flux d'au moins un- catalyseur de craquage catalytique, et ;
- au moins un -notamment un flux d'au moins un- composé alcalin, et ;
- un flux de liquide inerte ;
de façon à former un flux de ladite dispersion de craquage présentant une température inférieure à ladite température de craquage et dans laquelle au moins un catalyseur est en contact avec au moins un composé hydrocarboné du matériau solide à l'état divisé.

Rien n'empêche de réaliser, suite à ce mélange, une étape additionnelle d'ajustement de la granulométrie de ladite dispersion de craquage. On réalise un tel ajustement de la granulométrie par tout moyen de fragmentation approprié.

Avantageusement, dans certains modes de réalisation préférentiels d'un procédé selon l'invention, on réalise ensuite une étape de chauffage du flux de ladite dispersion de craquage à une température inférieure à la température de craquage de chaque composé hydrocarboné du matériau solide à l'état divisé. Dans ces conditions, la température de formation de coke n'est pas atteinte dans ladite dispersion de craquage. On peut réaliser cette étape de chauffage par tous moyens de chauffage approprié, à l'exclusion de tout moyen de chauffage présentant une paroi d'échange de chaleur par contact avec ladite dispersion de craquage et chauffée à une température supérieure ou égale à la température de formation de coke, c'est-à-dire supérieure ou égale à 360°C -notamment supérieure à 400°C-. Rien n'empêche cependant de chauffer ladite dispersion de craquage avec des moyens de chauffage présentant une paroi d'échange de chaleur par contact dès lors que cette paroi d'échange de chaleur n'est pas portée à une température supérieure ou égale à 360°C. Une telle étape de chauffage de ladite dispersion de craquage permet avantageusement d'élever sa température jusqu'à une température au plus proche et cependant inférieure à la température de craquage de chaque composé hydrocarboné du matériau solide à l'état divisé.

Avantageusement, dans ce mode de réalisation préférentiel d'un procédé selon l'invention, on chauffe un flux de liquide inerte -exempt de matériau solide hydrocarboné, de catalyseur et de composé alcalin- de façon que le liquide inerte de ce flux atteigne une température supérieure à ladite température de craquage. On chauffe le liquide inerte à une température choisie pour que le mélange formé par ladite dispersion de craquage et par le liquide inerte chaud atteigne et dépasse la température de craquage d'au moins un -notamment de chaque- composé hydrocarboné du matériau solide à l'état divisé et reste cependant inférieure à la température de formation de coke. On réalise ce chauffage par tout moyen de chauffage approprié, notamment par tout moyen d'échange de chaleur avec une source de chaleur via un échangeur de chaleur.

Avantageusement, dans ce mode de réalisation préférentiel d'un procédé selon l'invention, on choisit et on ajuste :
- la température du flux de liquide inerte,
- la température du flux de ladite dispersion de craquage,
- un débit du flux de liquide inerte, et
- un débit du flux de ladite dispersion de craquage ;
de façon que la température du mélange de ladite dispersion de craquage et du liquide inerte atteigne une température au moins égale à la température de craquage d'au moins un -notamment de chaque- composé hydrocarboné du matériau solide à l'état divisé et inférieure à la température de formation de coke. On forme ainsi un flux du mélange dans lequel se produit la réaction de craquage catalytique à une température inférieure à la température de formation de dioxine et inférieure à la température de formation de furanne.

Rien n'empêche cependant de réaliser un mélange d'une quantité prédéterminée de ladite dispersion de craquage et d'une quantité prédéterminée de liquide inerte à une température supérieure à la température de craquage d'au moins un -notamment de chaque- composé hydrocarboné du matériau solide à l'état divisé. On forme ainsi une dispersion de craquage à température au moins égale à la température de craquage d'au moins un -notamment de chaque- composé hydrocarboné du matériau solide à l'état divisé et dans laquelle la réaction de craquage catalytique se produit.

Selon l'invention, ladite température de craquage est comprise entre 240°C et 340°C -notamment entre 280°C et 340°C-. Ladite température de craquage de ladite dispersion de craquage dépend de la composition chimique et/ou de l'origine du matériau -notamment du déchet- solide hydrocarboné. On adapte le chauffage de ladite dispersion de craquage par mélange avec du liquide inerte chaud de façon que la température de ladite dispersion de craquage soit au moins égale à la température de craquage d'au moins un -notamment de chaque- composé hydrocarboné du matériau solide à l'état divisé et inférieure à la température de formation de coke.

Avantageusement, dans certains modes de réalisation d'un procédé selon l'invention, on réalise le mélange -notamment en flux continu- :
- du liquide inerte porté à une température supérieure à la température de craquage d'au moins un -notamment de chaque- composé hydrocarboné du matériau solide à l'état divisé, et
- de ladite dispersion de craquage portée à une température inférieure à la température de craquage de chaque composé hydrocarboné du matériau solide à l'état divisé ;
à pression atmosphérique ou à une pression inférieure à la pression atmosphérique ou à une pression supérieure à la pression atmosphérique. Une pression inférieure à la pression atmosphérique est particulièrement adaptée pour éviter une fuite d'hydrocarbures à courte chaîne vers l'extérieur du dispositif.

À mesure de leur apparition, les composés à l'état gazeux (carburant, dioxyde de carbone, vapeur d'eau) forment avec le liquide inerte une mousse (huile/gaz) en expansion avec le développement de la réaction de craquage.

Avantageusement et selon l'invention, ladite dispersion de craquage portée à une température au moins égale à ladite température de craquage formant une mousse, dite mousse de craquage, du fait -d'une formation d'une phase gazeuse (comprenant notamment des hydrocarbures à chaînes courtes, du dioxyde de carbone, de la vapeur d'eau, etc...) lors- de la réaction de craquage, on soumet ladite mousse de craquage à une étape de centrifugation par laquelle on réalise une séparation d'une phase gazeuse (comprenant notamment des hydrocarbures à chaînes courtes, du dioxyde de carbone, de la vapeur d'eau, etc...) et d'une composition mixte solide/liquide formée d'une dispersion de matières solides issues du craquage dans le liquide inerte, c'est-à-dire de matières solides présentes initialement dans la dispersion de craquage (contenant du catalyseur et, le cas échéant, du matériau solide à l'état divisé) et/ou de matières solides formées lors du craquage catalytique.

Avantageusement, dans certains modes de réalisation d'un procédé selon l'invention, un flux de ladite dispersion de craquage portée à une température au moins égale à ladite température de craquage formant un flux d'une mousse, dite mousse de craquage, du fait de la réaction de craquage, on soumet le flux de ladite mousse de craquage à une étape de centrifugation par laquelle on réalise une séparation d'un flux d'une phase gazeuse (comprenant notamment des hydrocarbures à chaînes courtes, du dioxyde de carbone, de la vapeur d'eau, etc) et d'un flux d'une composition mixte solide/liquide formée d'une dispersion dans le liquide inerte de matières solides issues du craquage catalytique.

Une telle étape de centrifugation est également adaptée pour former des turbulences dans ladite mousse de craquage et une séparation d'une phase gazeuse. De telles turbulences favorisent une redistribution du(des) catalyseur(s) et du matériau solide à l'état divisé et la poursuite de la réaction de craquage dans ladite mousse de craquage et dans la composition mixte solide/liquide du fait du déplacement de l'équilibre de la réaction de craquage lors de la libération des produits gazeux libérés. Une telle étape de centrifugation permet d'augmenter le rendement de la réaction et de diminuer la quantité de matériau solide à l'état divisé dans le bain de liquide inerte.

On réalise, par exemple, l'étape de centrifugation en soumettant ladite mousse de craquage -notamment ladite mousse du flux de ladite mousse de craquage- à une centrifugation par laquelle ladite mousse de craquage est projetée à travers le maillage d'une grille entrainant une fragmentation de ladite mousse de craquage en particules favorisant la libération des composés en phase gazeuse.

Avantageusement et selon l'invention, on réalise une condensation de la phase gazeuse dans des conditions propres à fractionner la phase gazeuse et à former les produits énergétiques -notamment le carburant-. On réalise cette condensation par exemple au moyen d'un dispositif de distillation fractionnée dans lequel les composants de la phase vapeur -notamment la vapeur d'eau et le carburant- sont séparés.

Avantageusement et selon l'invention, on soumet la composition mixte solide/liquide -notamment la composition mixte solide/liquide d'un flux de composition mixte solide/liquide- issue de l'étape de centrifugation à une étape de séparation liquide/solide dans laquelle on forme du liquide inerte sensiblement exempt de matières solides, puis on recycle le liquide inerte. On soumet la composition mixte solide/liquide à une étape de séparation liquide/solide de matières solides et de liquide inerte sensiblement exempt de matières solides (et donc exempt de composé hydrocarboné, de matériau solide à l'état divisé et de catalyseur) et on recycle le liquide inerte.

Avantageusement, on soumet un flux de la composition mixte solide/liquide à une étape de séparation liquide/solide de matières solides et d'un flux de liquide inerte et on recycle le liquide inerte du flux de liquide inerte.

Avantageusement, on réalise l'étape de séparation liquide/solide par décantation des matières solides. Avantageusement, on réalise cette étape de séparation liquide/solide en guidant un flux à basse vitesse d'écoulement -par exemple de l'ordre de 5 mm par seconde- de la composition mixte solide/liquide selon une direction sensiblement verticale et descendante de telle sorte que le flux de la composition mixte solide/liquide conduise -compte tenu de la différence de densités du liquide inerte et des matières solides- à une décantation des matières solides de la composition mixte solide/liquide et en réorientant le flux de liquide inerte résultant de cette décantation selon une direction sensiblement verticale et montante de sorte que les matières solides et le liquide inerte de la composition mixte solide/liquide soient séparés. On forme ainsi un flux de liquide inerte, dit liquide inerte régénéré, sensiblement exempt de matières solides. On forme un flux dudit liquide inerte régénéré à une température inférieure à la température de craquage, notamment comprise entre 220°C et 320°C.

Dans un procédé selon l'invention, avantageusement, on recycle ledit liquide inerte régénéré. Dans un procédé selon l'invention, on recycle ledit liquide inerte régénéré à toute étape du procédé dans laquelle du liquide inerte est requis. Il est possible de recycler au moins une partie dudit liquide inerte régénéré pour former la dispersion dudit matériau sec dans le liquide inerte, pour former ladite dispersion de craquage à partir de la dispersion désoxygénée dudit matériau sec dans le liquide inerte, ou encore pour former ladite dispersion de craquage à la température de craquage. Avantageusement, on recycle ledit liquide inerte régénéré d'un flux dudit liquide inerte régénéré à toute étape du procédé dans laquelle un flux de liquide inerte est requis.

Avantageusement et selon l'invention, lors de l'étape de séparation liquide/solide, on collecte les matières solides contenant du catalyseur. Avantageusement, on procède à une extraction du catalyseur en vue de son recyclage et de sa réutilisation dans un procédé de craquage catalytique selon l'invention.

Dans certains modes de réalisation avantageux d'un procédé selon l'invention, on forme une circulation de liquide inerte entre :
- une zone (a) de mélange :
   ∘ d'un flux de liquide inerte ;
   ∘ d'un flux de ladite dispersion désoxygénée ;
   ∘ d'un flux d'au moins un catalyseur, et ;
   ∘ d'un flux d'au moins un composé alcalin ;
   et de formation d'un flux de ladite dispersion de craquage à une température inférieure à la température de craquage de chaque composé hydrocarboné du matériau solide à l'état divisé ;

- une zone (b) de chauffage d'un flux de liquide inerte à une température supérieure à la température de craquage ;
- une zone (c) de chauffage d'un flux de ladite dispersion de craquage à une température inférieure à la température de craquage de chaque composé hydrocarboné du matériau solide à l'état divisé ;
- une zone (d) de mélange :
   ∘ d'un flux de ladite dispersion de craquage chauffée à une température inférieure à la température de craquage de chaque composé hydrocarboné du matériau solide à l'état divisé, et
   ∘ d'un flux de liquide inerte à une température supérieure à la température de craquage d'au moins un -notamment de chaque- composé hydrocarboné du matériau solide à l'état divisé ;
et de craquage catalytique d'au moins un -notamment de chaque- composé hydrocarboné du matériau solide à l'état divisé ;
- une zone (e) de centrifugation de ladite dispersion de craquage sous forme de mousse et de génération d'un flux d'une composition mixte solide/liquide ;
- une zone (f) de séparation solide/liquide de matières solides et du liquide inerte, le liquide inerte étant recyclé en zone (a) de mélange.

Dans ces modes de réalisation avantageux d'un procédé selon l'invention, on forme (par mélange d'un flux de ladite dispersion de craquage à une température inférieure à la température de craquage de chaque composé hydrocarboné et d'un flux de liquide inerte à une température supérieure à la température de craquage d'au moins un -notamment de chaque- composé hydrocarboné) en continu un flux de ladite dispersion de craquage à une température au moins égale à la température de craquage d'au moins un -notamment de chaque- composé hydrocarboné et inférieure à la température de formation de coke, on condense en continu les vapeurs d'hydrocarbures formés du fait du craquage catalytique, on recycle un flux de liquide inerte régénéré (et le cas échéant le catalyseur) de façon à former en continu un flux de ladite dispersion de craquage à une température inférieure à la température de craquage de chaque composé hydrocarboné.

Un tel procédé de production de produits énergétiques -notamment de carburant- en continu permet de :
- maintenir en contact le matériau solide à l'état divisé, au moins un catalyseur et au moins un composé alcalin dans le liquide inerte ;
- former un flux de ladite dispersion de craquage à température inférieure à la température de craquage et de débit contrôlable, et ;
- former un flux de liquide inerte à température supérieure à la température de craquage et de débit contrôlable -notamment de liquide inerte régénéré-.

L'invention concerne également un procédé de production de produits énergétiques -notamment de carburant- par craquage catalytique d'un matériau -notamment d'un déchet- solide hydrocarboné, dans lequel on réalise une désoxygénation d'un matériau solide à l'état divisé contenant au moins un composé hydrocarboné. On réalise cette désoxygénation en maintenant le matériau solide à l'état divisé en contact avec une atmosphère gazeuse présentant une valeur de pression partielle en oxygène inférieure à la pression partielle d'oxygène de l'air atmosphérique.

Avantageusement et selon l'invention, on réalise les opérations de formation de ladite dispersion de craquage, la réaction de craquage catalytique, l'étape de séparation d'une phase gazeuse et d'une composition mixte solide/liquide -notamment par centrifugation- et l'étape de séparation liquide/solide de la composition mixte solide/liquide dans une même cuve, thermiquement isolée, adaptée pour pouvoir contenir un bain de liquide inerte.

Selon certains modes de réalisation avantageux d'un procédé selon l'invention de production de produits énergétiques -notamment de carburant- par craquage catalytique d'un matériau -notamment d'un déchet- solide à l'état divisé contenant de la biomasse, c'est-à-dire un matériau constitué au moins en partie de matière d'origine végétale et/ou de matière d'origine animale et/ou de matière d'origine, on apporte à ladite dispersion de craquage à ladite température de craquage, une quantité d'une composition gazeuse oxygénée -notamment sous pression supérieure à la pression atmosphérique- apte à provoquer une réaction exothermique avec au moins une partie de dihydrogène (H₂) à l'état gazeux produit lors du craquage. Un tel apport permet de façon totalement inattendue de pouvoir maintenir la température de la chambre de craquage à ladite température de craquage en compensant l'enthalpie de vaporisation des composés formés lors du craquage et en maintenant la température de ladite mousse de craquage et des composés gazeux à une température -notamment de l'ordre de 340°C- permettant leur vaporisation et leur distillation, sans production de coke.

Les inventeurs ont observé que, contrairement aux indications de US2009/267349 qui préconise de réaliser la réaction de craquage sous une atmosphère sensiblement exempte d'oxygène, il est possible de contrôler la réaction d'oxydation exothermique de dihydrogène (H₂) à l'état gazeux par au moins un apport contrôlé d'une composition gazeuse oxygénée directement au contact du dihydrogène produit dans ladite chambre de craquage. Un tel apport contrôlé contribue d'une part, en phase initiale (lors du mélange de ladite dispersion de craquage et de liquide inerte chaud) de la réaction de craquage (c'est-à-dire en partie inférieure de la chambre de craquage), à une production d'énergie thermique permettant d'élever la température de ladite dispersion de craquage de façon qu'elle contribue, si besoin, à atteindre la température de craquage d'au moins un composé hydrocarboné du matériau solide hydrocarboné sans avoir recours à un échangeur comprenant une surface d'échange à une température supérieure ou égale à la température de formation de coke. Il contribue principalement d'autre part, en phase terminale de la réaction de craquage (c'est-à-dire en partie supérieure de la chambre de craquage) à une production d'énergie thermique permettant de favoriser le maintien à l'état gazeux des hydrocarbures formés lors de la réaction de craquage par compensation au moins partielle, voire excédentaire, de l'enthalpie (endothermique) de vaporisation des hydrocarbures formés. Un tel apport de composition gazeuse oxygénée permet d'élever et/ou de maintenir la température de la mousse de craquage en partie supérieure de la chambre de craquage à une valeur de l'ordre de 330°C à 340°C nécessaire pour maintenir à l'état gazeux les hydrocarbures formés, notamment les hydrocarbures à chaîne hydrocarbonée présentant un nombre d'atomes de carbone inférieur ou égal à 18 (C₁₈).

Selon certains modes de réalisation, on réalise un tel apport en phase initiale de la réaction de craquage de façon à générer une production endogène d'énergie thermique permettant d'élever la température de ladite dispersion de craquage de façon qu'elle atteigne la température de craquage d'au moins un composé hydrocarboné du matériau solide hydrocarboné.

Selon certains modes de réalisation, on réalise un tel apport en phase terminale de la réaction de craquage de façon à générer une production endogène d'énergie thermique permettant de favoriser le maintien à l'état gazeux des hydrocarbures formés lors de la réaction de craquage par compensation de l'enthalpie de vaporisation des hydrocarbures formés.

Selon certains modes de réalisation avantageux selon l'invention :
- on chauffe un matériau solide hydrocarboné à l'état divisé à une température de l'ordre de 80°C, puis
- on place ce matériau solide hydrocarboné à l'état divisé au contact d'un flux de liquide inerte recyclé à une température de l'ordre de 330°C de façon à former une dispersion de matériau solide à l'état divisé dans le liquide inerte, puis
- on désoxygène et on sèche cette dispersion ce par quoi la température de cette dispersion est abaissée à une valeur de l'ordre de 100°C, puis
- on prépare ladite dispersion de craquage, puis
- on chauffe ladite dispersion de craquage à une température de l'ordre de 260°C au contact d'un échangeur de chaleur -dont la température n'excède pas 340°C-, puis
- on réalise un mélange de ladite dispersion de craquage avec du liquide inerte porté à une température de l'ordre de 340°C de façon que la température de ladite dispersion de craquage atteigne 280°C et que la réaction de craquage s'initie, puis
- on maintient la température de craquage par au moins une introduction de composition gazeuse oxygénée réactive avec du dihydrogène formé lors du craquage et compensatrice de l'enthalpie de vaporisation des hydrocarbures formés lors du craquage de façon que la température atteigne de l'ordre de 340°C permettant la poursuite du craquage et la vaporisation des hydrocarbures formés sans formation de coke.

L'invention concerne également un dispositif de production de produits énergétiques -notamment de carburant- par craquage catalytique d'un matériau -notamment d'un déchet- solide hydrocarboné. L'invention concerne en particulier un tel dispositif pour la mise en œuvre d'un procédé de production de produits énergétiques -notamment de carburant- selon l'invention.

L'invention concerne donc un dispositif de production de produits énergétiques tel que défini dans la revendication 10.

Avantageusement, un dispositif selon l'invention comprend des premiers moyens de chauffage et des moyens de contrôle de l'ajustement de la température de ladite dispersion de craquage par les premiers moyens de chauffage.

Le dispositif selon l'invention comprend des deuxièmes moyens de chauffage et des moyens de contrôle de l'ajustement de la température du flux de liquide inerte par les deuxièmes moyens de chauffage.

Avantageusement, les premiers moyens de chauffage sont distincts des deuxièmes moyens de chauffage.

Avantageusement et selon l'invention, le dispositif comprend des moyens de pompage de ladite dispersion de craquage et de formation du flux de ladite dispersion de craquage. De tels moyens de pompage de ladite dispersion de craquage sont adaptés pour permettre un prélèvement d'un flux de liquide inerte en amont des moyens de pompage, son mélange avec un flux d'au moins un catalyseur, un flux d'au moins un composé alcalin et un flux de ladite dispersion désoxygénée de façon à former en continu le flux de ladite dispersion de craquage. De tels moyens de pompage de ladite dispersion de craquage sont adaptés pour permettre en aval des moyens de pompage la formation d'un flux de ladite dispersion de craquage vers des premiers moyens de chauffage.

Avantageusement et selon l'invention, le dispositif comprend également des moyens de pompage de liquide inerte et de formation d'un flux de liquide inerte. De tel moyens de pompage de liquide inerte sont adaptés pour permettre en amont des moyens de pompage de liquide inerte un prélèvement d'un flux de liquide inerte -notamment d'un flux de liquide inerte régénéré- en vue de son chauffage à une température supérieure à la température de craquage. De tels moyens de pompage de liquide sont adaptés pour permettre en aval des moyens de pompage la formation d'un flux de liquide inerte destiné à la réaction de craquage via les deuxièmes moyens de chauffage.

Ces moyens de pompage (de ladite dispersion de craquage et du liquide inerte) permettent de réguler les débits respectifs du flux de ladite dispersion craquage et du flux de liquide inerte en fonction de la température de ladite dispersion craquage et de la température du liquide inerte. Le dispositif selon l'invention permet d'élever la température de ladite dispersion de craquage jusqu'à une valeur de température suffisante pour permettre le craquage catalytique d'au moins un -notamment de chaque- composé hydrocarboné du matériau solide à l'état divisé. La réaction de craquage d'au moins un -notamment de chaque- composé hydrocarboné du matériau solide à l'état divisé conduit à la formation dans ladite dispersion de craquage d'hydrocarbures à chaînes courtes à l'état gazeux et à la formation d'une mousse s'échappant de ladite chambre de craquage. L'expansion de la mousse hors de ladite chambre de craquage en combinaison avec le flux de ladite dispersion craquage, avec le flux du liquide inerte et avec les moyens de mélange du flux de ladite dispersion de craquage et du flux de liquide inerte conduisent à la formation d'un flux de mousse s'échappant par une ouverture supérieure débouchante formant l'issue de ladite chambre de craquage.

Avantageusement et selon un mode de réalisation préférentiel de l'invention, le dispositif est formé d'un seul tenant et comprend une cuve unique isolée thermiquement et adaptée pour pouvoir contenir un bain de liquide inerte et renfermant :
- ladite chambre de craquage ;
- au moins un dispositif, dit conduit de mélange, de mise en contact et de mélange :
   ∘ d'un flux d'une dispersion du matériau solide à l'état divisé dans du liquide inerte ;
   ∘ d'au moins un -notamment d'un flux d'au moins un- catalyseur, et ;
   ∘ d'au moins un -notamment d'un flux d'au moins un- composé alcalin, et ;
   ∘ d'un flux de liquide inerte formé à partir du bain de liquide inerte ;
   adapté pour former un flux de ladite dispersion de craquage à une température inférieure à ladite température de craquage ;
- au moins un organe de séparation liquide/solide -notamment un organe de séparation liquide/solide par décantation- de matières solides issues du craquage catalytique et de liquide inerte ;
- une première pompe interposée entre ledit conduit de mélange et ladite chambre de craquage et adaptée pour délivrer le flux de ladite dispersion de craquage dans ladite chambre de craquage via les premiers moyens de chauffage ;
- une deuxième pompe interposée entre l'organe de séparation solide/liquide et ladite chambre de craquage et adaptée pour délivrer le flux de liquide inerte exempt de matières solides dans ladite chambre de craquage via les deuxièmes moyens de chauffage.

La cuve unique isolée thermiquement permet de maintenir sensiblement la température du liquide inerte et de ladite dispersion de craquage circulant dans la cuve unique isolée thermiquement. Elle permet de limiter les pertes de chaleur. Elle permet également de limiter au strict nécessaire les apports de chaleur par chauffage du liquide inerte et de ladite dispersion de craquage et de parfaitement contrôler la température de ladite dispersion de craquage lors du craquage catalytique.

Le dispositif selon l'invention comprend dans une cuve unique les éléments nécessaires pour :
- préparer, chauffer et acheminer le flux de ladite dispersion de craquage dans ladite chambre de craquage ;
- préparer, chauffer et acheminer le flux de liquide inerte dans ladite chambre de craquage;
- former le mélange des flux de ladite dispersion de craquage et de liquide inerte et permettre la réaction de craquage catalytique sans formation de coke ;
- recycler le liquide inerte ;
- collecter le catalyseur en vue de son recyclage, et
- condenser les vapeurs d'hydrocarbures formées par craquage catalytique et produire le produit énergétique -notamment le carburant-.

Un dispositif selon l'invention, permet d'établir dans la cuve unique une circulation de ladite dispersion de craquage entre l'organe de mélange et de formation de ladite dispersion de craquage et ladite chambre de craquage et dans laquelle le matériau solide à l'état divisé est maintenu en suspension dans le liquide inerte en favorisant le contact entre au moins un -notamment entre chaque- composé hydrocarboné du matériau solide à l'état divisé et au moins un catalyseur.

Avantageusement et selon l'invention, le dispositif comprend, surmontant au moins une ouverture de ladite chambre de craquage, un organe de centrifugation d'une mousse, dite mousse de craquage, formée par craquage catalytique d'au moins un composé hydrocarboné du matériau solide à l'état divisé, adapté pour séparer une phase gazeuse contenant le produit énergétique -notamment le carburant- et une composition mixte solide/liquide formée d'une dispersion de matières solides issues du craquage dans le liquide inerte. Avantageusement, la composition mixte solide/liquide est incorporée dans le bain de liquide inerte.

L'organe de centrifugation peut être un organe de projection centrifuge de la mousse à travers les mailles d'une grille. Une telle projection de la mousse à travers la grille entraîne la fragmentation de ladite mousse de craquage en particules de taille réduite favorisant :
- la libération des composés en phase gazeuse, notamment du dioxyde de carbone, de la vapeur d'eau, etc, et en particulier la libération d'hydrocarbures à courtes chaînes en phase gazeuse, et ;
- le contact entre le catalyseur et des particules de matériau solide à l'état divisé non transformés.

Avantageusement et selon l'invention, le dispositif est muni d'un dispositif de condensation desdits hydrocarbures à courtes chaînes à l'état gazeux et de leur conversion en produit énergétique liquide.

Avantageusement et selon l'invention, le dispositif comprend des moyens de séparation solide/liquide du liquide inerte et de matières solides (matières solides de départ et/ou formées lors du craquage catalytique). Avantageusement, les moyens de séparation sont des moyens de séparation solide/liquide par décantation. De tels moyens de séparation solide/liquide par décantation sont conformés pour permettre l'établissement d'un flux vertical orienté sensiblement de haut en bas (descendant) de liquide inerte chargé de matières solides et l'établissement d'un flux ascendant de liquide inerte sensiblement exempt de matières solides séparées par décantation. Un dispositif selon l'invention est donc adapté pour permettre un recyclage du liquide inerte et sa réutilisation -notamment pour la préparation de ladite dispersion de craquage et pour la préparation de liquide inerte à une température supérieure à la température de craquage-. Un dispositif selon l'invention est donc également adapté pour permettre une décantation des matières solides résiduelles en fond de la cuve unique et leur évacuation par tout moyen connu.

Un dispositif selon l'invention comprend des moyens d'apport et de maintien du niveau de liquide inerte dans la cuve unique. Il peut s'agir de moyens d'apport de liquide inerte de remplacement ou de liquide inerte collecté après condensation.

Avantageusement, un dispositif selon l'invention comprend un convoyeur, dit convoyeur de séchage, à vis entrainée en rotation dans une enveloppe externe portée à une température adaptée pour permettre le chauffage d'un déchet solide à l'état divisé, une évaporation d'au moins une partie de son humidité, son séchage au moins partiel et la formation dudit matériau sec. Ledit convoyeur de séchage présente des moyens -notamment une colonne- de guidage et d'élimination de la vapeur d'eau formée à partir du déchet solide à l'état divisé.

Avantageusement, un dispositif selon l'invention comprend également un convoyeur à vis d'axe de rotation sensiblement vertical d'acheminement dudit matériau sec à partir de l'extrémité de sortie du convoyeur de séchage et débouchant dans un bain de liquide dans lequel ledit matériau sec est mis en contact du liquide inerte et forme un flux d'une dispersion dudit matériau sec dans le liquide inerte en évitant toute obstruction et tout blocage du convoyeur.

Avantageusement, selon un mode de réalisation préférentiel, le dispositif selon l'invention comprend une presse de compression d'ordures ménagères à une pression au moins égale à 750 bars et d'extrusion du matériau -notamment du déchet- solide hydrocarboné. Avantageusement, le matériau -notamment du déchet- solide hydrocarboné présente un taux d'humidité inférieur à 10%, notamment compris entre 8% et 10%. Selon ce mode de réalisation préférentiel, le dispositif selon l'invention comprend une presse à extruder, notamment une presse à extruder telle que décrite dans EP 0 563 173.

Le dispositif selon l'invention comprend au moins un dispositif d'introduction d'une composition gazeuse oxygénée -notamment d'une composition gazeuse oxygénée à une pression supérieure à la pression atmosphérique- dans ladite chambre de craquage. Un tel dispositif d'introduction peut comprendre une pluralité d'injecteurs de composition gazeuse oxygénée sous pression dans ladite chambre de craquage.

L'invention concerne également un dispositif de production de produits énergétiques -notamment de carburant- par craquage catalytique d'un matériau -notamment d'un déchet- solide hydrocarboné, comprenant une cuve unique a) de formation et de circulation d'un flux d'une dispersion, dite dispersion de craquage, comprenant un matériau hydrocarboné à l'état divisé, au moins un catalyseur et au moins un composé alcalin, b) de craquage catalytique de ladite dispersion de craquage et c) de recyclage d'un flux de liquide inerte vis-à-vis du craquage catalytique.

L'invention concerne également un procédé de production de produits énergétiques -notamment de carburant- et un dispositif pour la mise en œuvre de ce procédé, caractérisés en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux exemples donnés uniquement à titre d'illustration non limitative de l'invention et aux figures annexées dans lesquelles :
- la figure 1 est un schéma synoptique d'un procédé selon l'invention ;
- la figure 2 est un schéma synoptique d'une variante particulière d'un procédé selon l'invention ;
- la figure 3 est une représentation schématique d'une première variante particulière d'un dispositif selon l'invention ;
- la figure 4 est une représentation schématique d'une deuxième variante particulière d'un dispositif selon l'invention ;
- la figure 5 est une représentation en coupe transversale selon le plan A-A d'un détail du dispositif représenté en figure 4, et ;
- la figure 6 est une représentation schématique d'un détail de la deuxième variante particulière d'un dispositif selon l'invention représenté en figure 4.

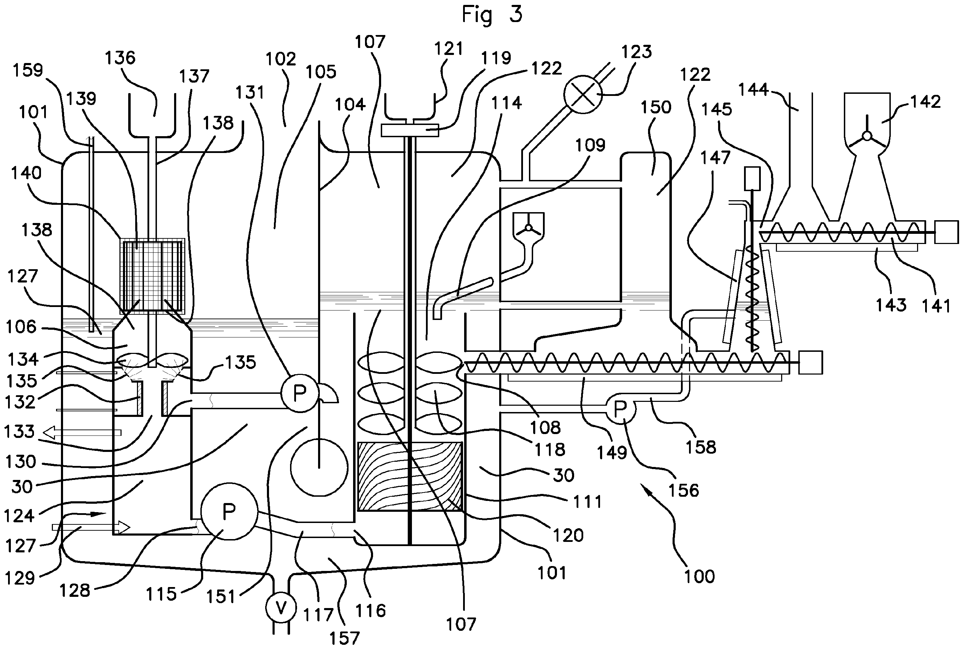

Sur les figures 3 à 6, les échelles et les proportions ne sont pas nécessairement strictement respectées à des fins de clarté de l'illustration. Les termes « inférieur », « supérieur », « haut » et « bas » s'entendent par rapport au dispositif en état de fonctionnement, c'est à dire dans lequel un bain de liquide inerte remplit partiellement la cuve en partie basse du dispositif et que l'organe de collecte des vapeurs formées lors du craquage s'étend en partie supérieure du dispositif.

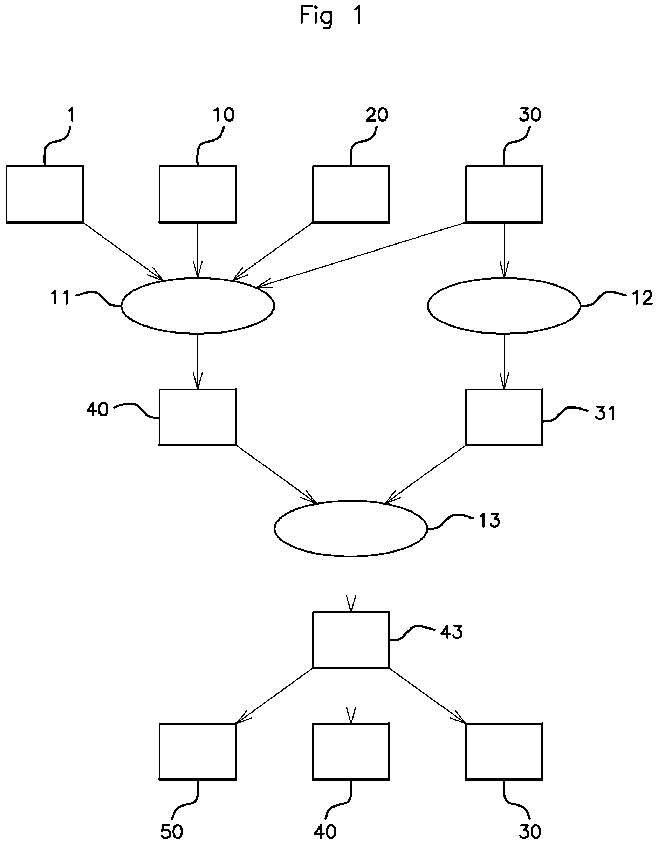

Un schéma synoptique d'un procédé de production de carburant par craquage catalytique d'un matériau solide hydrocarboné selon l'invention est représenté en figure 1. Dans un tel procédé, on prépare une dispersion, dite dispersion 40 de craquage, par mélange 11 d'une quantité d'un matériau 1 solide -notamment d'un déchet- à l'état divisé contenant au moins un composé hydrocarboné-, d'une quantité d'au moins un catalyseur 10, d'une quantité d'au moins un composé 20 alcalin -notamment de chaux- et d'une quantité de liquide 30 inerte vis-à-vis du craquage catalytique, c'est-à-dire un liquide 30 inerte qui ne subit pas de modification chimique lorsqu'il est placé dans des conditions (catalyseur, température...) de transformation de composés hydrocarbonés du matériau solide à l'état divisé en hydrocarbures à chaînes courtes. On réalise un tel mélange 11 dans des conditions choisies pour permettre une dispersion du matériau 1 solide à l'état divisé, du catalyseur 10 et du composé 20 alcalin dans le liquide 30 inerte et une mise en contact des composés hydrocarbonés du matériau 1 solide à l'état divisé et du catalyseur 10. En particulier, on chauffe le matériau 1 solide à l'état divisé, notamment à une température comprise entre 50°C et 100°C, par exemple à de l'ordre de 80°C. Un tel chauffage permet de faciliter la dispersion du matériau 1 solide à l'état divisé dans le liquide 30 inerte. On prépare ladite dispersion 40 de craquage à une température inférieure à la température de craquage de chaque composé hydrocarboné du matériau solide hydrocarboné et de préférence à une température aussi proche que possible de cette température de craquage. Rien n'empêche cependant de chauffer ladite dispersion 40 de craquage où certains des éléments constitutifs de ladite dispersion 40 de craquage au cours de son élaboration dès lors que ce chauffage ne permet pas une élévation de la température de ladite dispersion 40 de craquage à une température supérieure à la température de craquage d'au moins un composé hydrocarboné du matériau 1 solide à l'état divisé. Dans ces conditions, aucune réaction de craquage d'un composé hydrocarboné du matériau 1 solide à l'état divisé, ni aucune réaction de formation de coke ne se produit lors du mélange 11.

Dans un tel procédé, on réalise également une étape 12 de chauffage d'une partie du liquide 30 inerte. On réalise cette étape 12 de chauffage par tout moyen de chauffage approprié et adapté pour pouvoir augmenter la température d'une partie du liquide 30 inerte jusqu'à une température supérieure à la température de craquage d'au moins un -notamment de chaque- composé hydrocarboné du matériau 1 solide à l'état divisé. On forme un liquide 31 inerte chaud. Ce liquide 31 inerte chaud est exempt de matériau 1 solide à l'état divisé, ne subit aucun craquage catalytique et ne conduit pas la formation de coke lors de l'étape 12 de chauffage.

Aux fins du craquage, on réalise un mélange 13 d'une quantité de ladite dispersion 40 de craquage et de liquide 31 inerte chaud de façon que la température du mélange atteigne une température au moins égale à la température de craquage d'au moins un -notamment de chaque- composé hydrocarboné du matériau 1 solide à l'état divisé mais toutefois inférieure à la température de formation de coke. Le procédé selon l'invention permet que la température du mélange passe d'une température inférieure mais proche de la température de craquage à une température au moins égale à la température de craquage d'au moins un -notamment de chaque- composé hydrocarboné, sans nécessiter un chauffage de ladite dispersion 40 de craquage au contact d'une surface chauffée à une température au moins égale -notamment supérieure- à la température de formation de coke, de dioxines et de furannes. Dans un procédé selon l'invention, la température à cœur de ladite dispersion 40 de craquage reste inférieure à la température de formation de coke lors de l'étape 13 de mélange.

En pratique, on réalise l'étape 13 de mélange :
- d'une quantité de ladite dispersion 40 de craquage portée à une température inférieure à la température de craquage -c'est-à-dire inférieure à une température comprise entre 240°C et 340°C -notamment entre 280°C et 340°C-selon la composition chimique du matériau solide hydrocarboné-, sans recourir à un échange de chaleur par contact avec une surface chauffante d'un dispositif chauffant portée à une température supérieure à 360°C -notamment de l'ordre de 400°C- et excluant tout risque de formation de coke ;
- d'une quantité de liquide 31 inerte chaud porté à une température telle que la température du mélange de la quantité de ladite dispersion 40 de craquage et de la quantité de liquide 31 inerte chaud atteigne la température de craquage et sans que le chauffage du liquide 30 inerte entraine la formation de coke dès lors que le liquide 30 inerte est exempt de matériau solide à l'état divisé, de composé hydrocarboné et de catalyseur.

Il ne s'ensuit pas de formation de coke.

Il résulte du mélange de ladite dispersion 40 de craquage et du liquide 31 inerte chaud, la formation de composés à l'état gazeux, notamment d'hydrocarbures 50 à chaînes courtes à l'état gazeux à la température de craquage, de dioxyde de carbone et de vapeur d'eau qui, combinés au liquide 31 inerte chaud, conduisent à la formation d'une mousse 43 (liquide/gaz) de craquage. Ladite mousse 43 de craquage comprend des hydrocarbures 50 à chaînes courtes à l'état gazeux formés lors de la réaction de craquage et à l'origine du carburant 50 par condensation, mais également du catalyseur 10 et du liquide 30 inerte, inchangés au cours de la réaction de craquage.

Dans un tel procédé selon l'invention, la formation des hydrocarbures 50 en phase gazeuse par craquage catalytique ne s'accompagne pas de la formation de coke dès lors que la température de ladite dispersion 40 de craquage reste inférieure à la température de formation de coke.

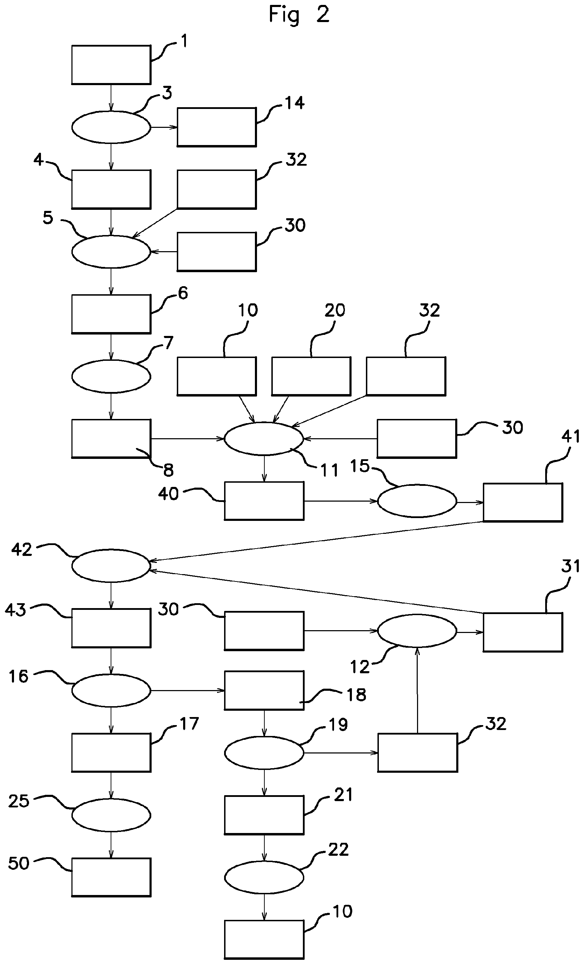

Un schéma synoptique d'un mode de réalisation particulier d'un procédé de production de carburant selon l'invention est représenté en figure 2. Dans ce mode de réalisation particulier, on sélectionne un matériau solide à l'état divisé contenant au moins un composé hydrocarboné. Il peut s'agir d'un déchet 1 solide à l'état divisé contenant au moins un composé hydrocarboné, notamment de la matière organique, de la matière cellulosique et/ou des matériaux synthétiques polymériques. Un tel déchet 1 solide à l'état divisé est en général sensiblement exempt de matières putrescibles. Un tel déchet 1 solide à l'état divisé peut être obtenu par exemple à l'issue d'une procédure de tri sélectif de déchets ménagers ou à l'issue d'un traitement par compression d'ordures ménagères dans une presse adaptée pour pouvoir séparer les matières putrescibles et les matières combustibles des ordures ménagères. En général, un tel déchet solide à l'état divisé peut présenter un taux d'humidité compris entre 10% à 30%.

Dans une étape non représentée en figure 2, on soumet des ordures ménagères à une compression jusqu'à une pression supérieure à 750 bars dans des conditions propres à extraire une fraction fermentescible sous forme de pulpe humide et à former le matériau -notamment le déchet- solide hydrocarboné. Il est possible et avantageux de réaliser une telle compression au moyen d'une presse à extruder, notamment telle que décrite dans EP 0 563 173.

Dans une autre étape non représentée en figure 2, on réalise une fragmentation du matériau -notamment du déchet- solide hydrocarboné de façon à former le matériau 1 -notamment le déchet- solide à l'état divisé. Le matériau 1 solide à l'état divisé peut être obtenu par tout procédé approprié de fragmentation d'un matériau solide hydrocarboné. Il peut être obtenu en soumettant le matériau solide hydrocarboné à une étape d'extrusion dans un extrudeur -par exemple, un extrudeur simple vis ou bi-vis-. Il peut également être obtenu par lacération d'un matériau solide hydrocarboné. À l'issue de cette étape de fragmentation, le matériau 1 solide à l'état divisé est sous forme de particules solides présentant une plus grande dimension inférieure à de l'ordre de 20 mm et au moins une dimension inférieure ou égale à 3 mm. De préférence, le matériau 1 solide à l'état divisé est sous forme de particules solides présentant une surface spécifique inférieure ou égale à 10 cm² et une épaisseur inférieure ou égale à 3 mm.

Dans le mode de réalisation représenté en figure 2, on soumet le matériau 1 solide à l'état divisé à une étape 3 de chauffage du matériau 1 solide à l'état divisé. Un tel chauffage -à une température comprise entre 50°C et 100°C, par exemple de 80°C- permet de faciliter sa dispersion ultérieure dans le liquide 30 inerte. Il permet également une élimination d'eau sous forme vapeur du matériau 1 solide à l'état divisé et son séchage au moins partiel. Dans cette étape 3 de séchage, on introduit le matériau 1 solide à l'état divisé à une extrémité d'entrée d'un convoyeur, dit convoyeur de chauffage/séchage, à vis équipé d'une gaine périphérique chauffante. On choisit un tel convoyeur de chauffage/séchage adapté pour pouvoir chauffer le matériau 1 solide à l'état divisé lors de son convoyage. Rien n'empêche qu'un tel convoyeur de chauffage/séchage présente des moyens de collecte de vapeur d'eau libérée lors du séchage 3 et de condensation de vapeur d'eau 14. Dans cette étape de séchage 3, il est possible d'introduire le matériau 1 solide à l'état divisé en continu dans le convoyeur de chauffage/séchage à partir d'une trémie de stockage du matériau 1 solide à l'état divisé et de distribution contrôlée du matériau 1 solide à l'état divisé.

On soumet ensuite le matériau 4 solide à l'état divisé chaud à une étape 5 de dispersion dans du liquide 30 inerte vis-à-vis du craquage catalytique et/ou avec du liquide 30 inerte -notamment du liquide 32 inerte régénéré-. Pour ce faire, on collecte ledit matériau 4 solide à l'état divisé chaud en sortie du convoyeur de chauffage/séchage et on disperse ledit matériau 4 solide à l'état divisé chaud dans du liquide 30 inerte à une température comprise entre 200°C et 360°C, par exemple du liquide 30 inerte prélevé à partir de la mouse de craquage et recyclé à une température légèrement inférieure à la température de la mousse de craquage, notamment à une température de l'ordre de 330°. On réalise cette dispersion 5 au moyen d'un dispositif comprenant un convoyeur à vis d'axe de rotation sensiblement vertical permettant un acheminement dudit matériau 4 solide à l'état divisé chaud à partir de l'extrémité de sortie du convoyeur à vis chauffant jusqu'au bain de liquide 30 inerte dans lequel plonge l'extrémité de sortie du convoyeur à vis verticale. On obtient ainsi une dispersion, dite dispersion 6 chaude, du matériau 4 solide à l'état divisé chaud dans le liquide 30 inerte. Un tel convoyeur à vis vertical permet d'amener ledit matériau 4 solide à l'état divisé chaud au contact du liquide 30 inerte et sa dispersion 5 dans le liquide 30 inerte. De cette façon, on évite un engorgement du dispositif d'amenée de ladite dispersion 6 dudit matériau 4 solide à l'état divisé chaud dans le dispositif de production de carburant.

Suite à ce mélange, on soumet ladite dispersion 6 chaude à une étape 7 de désoxygénation et de transfert vers un dispositif de production de carburant. On réalise cette étape 7 de désoxygénation par tout moyen approprié, par exemple en plaçant ladite dispersion 6 chaude en contact avec une atmosphère gazeuse à une pression inférieure à la pression atmosphérique ou en plaçant ladite dispersion 6 chaude en contact avec une atmosphère gazeuse présentant une pression partielle en oxygène inférieure à la pression partielle en oxygène de l'air atmosphérique. Il en résulte une extraction d'oxygène (O₂) moléculaire de ladite dispersion 6 chaude. On réalise par exemple cette étape 7 de désoxygénation dans un convoyeur, dit convoyeur de désoxygénation, à vis comprenant une cloche de mise en contact de ladite dispersion 6 chaude avec une composition gazeuse, notamment de l'air atmosphérique, à une pression inférieure à la pression atmosphérique. Du fait de la température et de la dépression établie dans la cloche en dépression, ledit convoyeur de désoxygénation permet une extraction d'eau et un séchage de ladite dispersion 6 chaude. On abaisse le taux d'humidité du matériau 4 solide à l'état divisé d'une valeur initiale comprise entre 10 % et 30 % à une valeur inférieure à 10%, notamment comprise entre 8 % et 10 %, de préférence de l'ordre de 8%.

On forme en sortie dudit convoyeur de désoxygénation un flux d'une dispersion 8 désoxygénée du matériau 4 solide à l'état divisé d'humidité réduite dans du liquide inerte.

On introduit le flux de la dispersion 8 désoxygénée dans un organe de mélange du flux de la dispersion 8 désoxygénée, d'un flux d'au moins un catalyseur 10 de craquage, d'un flux d'au moins un composé 20 alcalin et d'un flux de liquide 30 inerte et/ou d'un flux de liquide 32 inerte régénéré. On adapte les débits des flux de la dispersion 8 désoxygénée, de catalyseur 10 de craquage, de composé 20 alcalin et de liquide 30 inerte en amont de l'entrée de l'organe de mélange et de manière appropriée pour respecter leurs proportions dans le mélange.

Dans cet organe de mélange, on réalise, par mélange 11 du flux de la dispersion 8 désoxygénée, du flux de catalyseur 10, du flux de composé alcalin 20 et du flux de liquide 30 inerte, une dispersion, dite dispersion 40 de craquage, à une température inférieure à la température de craquage de chaque composé hydrocarboné du matériau solide à l'état divisé. Dans un mode de réalisation particulièrement avantageux, on prélève le flux de liquide 30 inerte et/ou le flux de liquide 32 inerte régénéré dans un bain de liquide 30 inerte contenu dans une cuve du dispositif de production de carburant. On forme, en sortie de l'organe de mélange, un flux de ladite dispersion 40 de craquage entretenu par des premiers moyens de pompage de ladite dispersion 40 de craquage placés en aval de l'organe de mélange et adaptés pour permettre un refoulement de ladite dispersion 40 de craquage dans un conduit de chauffage de ladite dispersion 40 de craquage puis dans une chambre, dite chambre de craquage, de mélange d'un flux de ladite dispersion 40 de craquage et d'un flux de liquide 31 inerte chaud. On réalise une étape 15 de chauffage de ladite dispersion 40 de craquage et on forme une dispersion 41 de craquage chaude à une température inférieure à la température de craquage catalytique de chaque composé hydrocarboné.

On forme également un flux de liquide 30 inerte et/ou de liquide 32 inerte régénéré entretenu par des deuxièmes moyens de pompage et de refoulement de ce flux dans ladite chambre de craquage. On réalise un chauffage 12 de ce flux de liquide 30 inerte et/ou de liquide 32 inerte régénéré avant son introduction dans ladite chambre de craquage. On forme un flux de liquide 31 inerte chaud à une température supérieure à la température de craquage d'au moins un -notamment de chaque- composé hydrocarboné du matériau solide à l'état divisé. Le liquide 31 inerte chaud étant exempt de tout composé hydrocarboné du matériau 1 solide à l'état divisé et de catalyseur, il ne subit ni craquage catalytique ni ne permet la formation de coke.

Dans ladite chambre de craquage, on réalise une étape 42 de mélange du flux de ladite dispersion 41 de craquage chaude, et du flux de liquide 31 inerte chaud. On adapte les températures respectives de ladite dispersion 41 de craquage chaude et du liquide 31 inerte chaud et les débits du flux de ladite dispersion 41 de craquage chaude et du flux de liquide 31 inerte chaud de façon que la température du mélange 43 formé soit au moins égale à la température de craquage d'au moins un -notamment de chaque- composé hydrocarboné du matériau 1 solide à l'état divisé et inférieure à la température de formation de coke. On réalise ce mélange 42 par tout moyen de mélange approprié. La réaction de craquage catalytique s'initie dans le mélange 43 porté à une température au moins égale à la température de craquage d'au moins un -notamment de chaque- composé hydrocarboné du matériau solide à l'état divisé, libérant des hydrocarbures à chaînes courtes, du dioxyde de carbone, de la valeur d'eau de sorte que le mélange formé prend la forme d'une mousse, dite mousse 43 de craquage, se développant dans ladite chambre de craquage. Sous l'effet conjugué de moyens de mélange et de la production d'hydrocarbures à l'état gazeux, de vapeur d'eau et de dioxyde de carbone, ladite mousse 43 de craquage se développe dans ladite chambre de craquage en direction et jusqu'à une ouverture supérieure débouchante de ladite chambre de craquage. On soumet ladite mousse 43 de craquage à une étape 16 de centrifugation et de séparation d'une phase 17 gazeuse et d'une composition 18 mixte solide/liquide formée d'une dispersion de matières solides issues du craquage catalytique dans du liquide 30 inerte. Dans un mode de réalisation particulièrement avantageux, on dirige la composition 18 mixte solide/liquide vers le bain de liquide 30 inerte contenu dans la cuve du dispositif de production de carburant. Le liquide 30 inerte s'étendant dans le dispositif de production de carburant circule entre l'organe de mélange et de formation de ladite dispersion 40 de craquage et ladite chambre de craquage dans laquelle il forme la composition 18 mixte solide/liquide. Cette circulation est entretenue par des premiers moyens de pompage de ladite dispersion 40 de craquage. Le flux de liquide 30 inerte recevant la composition 18 mixte solide/liquide est dirigé du fait de premiers moyens de pompage vers l'entrée de l'organe de mélange et soumis, avant son entrée dans l'organe de mélange, à une étape 19 de séparation par décantation de matières 21 solides et d'un flux de liquide 32 inerte régénéré. On extrait du dispositif de production de carburant les matières 21 solides décantées. Le cas échéant, le catalyseur 10 subit une étape de recyclage 22 en vue de sa réutilisation, et le flux de liquide 32 inerte régénéré sensiblement exempt de matières 21 solides est recyclé lors de l'étape 5 de mélange dudit matériau 4 sec dans le liquide 30 inerte, ou lors du mélange 11 de préparation de ladite dispersion 40 de craquage, ou lors de l'étape 12 de chauffage de liquide 30 inerte et/ou de liquide 32 inerte régénéré aux fins d'initier la réaction de craquage.

Dans un mode de réalisation particulièrement avantageux d'un procédé selon l'invention représenté en figure 2, lors de l'étape 19 de séparation par décantation, on recycle au moins une partie du flux de liquide 30 inerte et on forme un flux de liquide 32 inerte régénéré qui est soumis à un chauffage 12 de ce flux de liquide 32 inerte régénéré à une température supérieure à la température de craquage avant son introduction dans ladite chambre de craquage. Dans ce mode de réalisation particulièrement avantageux d'un procédé selon l'invention représenté en figure 2, on recycle au moins une autre partie du flux de liquide 30 inerte et on forme un flux de liquide 32 inerte régénéré apte à être mélangé avec du matériau 4 solide à l'état divisé.

On soumet la phase 17 gazeuse issue de ladite mousse 43 de craquage à une étape 25 de condensation des vapeurs d'hydrocarbures à courtes chaînes de façon à former le carburant 50.

Une première variante particulière d'un dispositif 100 de production de carburant par craquage catalytique d'un matériau solide hydrocarboné selon l'invention est représentée schématiquement en figure 3.

Le dispositif 100 de production de carburant comprend une cuve 101 en matériau rigide et adaptée pour recevoir un bain de liquide 30 inerte. La cuve 101 est une cuve isolée thermiquement de façon à maintenir sensiblement la température des fluides circulant dans la cuve 101. La cuve 101 présente une cloison 104 verticale de séparation partielle s'étendant entre un premier espace, dit espace 105 de craquage, comprenant une chambre 106 de craquage et un deuxième espace, dit espace 107 de mélange, de préparation d'une dispersion, dite dispersion de craquage, comprenant un matériau solide à l'état divisé, au moins un catalyseur de craquage, au moins un composé alcalin et du liquide inerte.

Ledit espace 105 de craquage est à la pression atmosphérique et présente une ouverture 102 débouchant en partie supérieure de la cuve 101. L'ouverture 102 de la cuve 101 est adaptée pour recevoir un organe (non représenté en figure 3) de collecte des vapeurs formées lors de la réaction de craquage catalytique et de condensation fractionnée de ces vapeurs. L'organe de collecte peut être une colonne de distillation fractionnée et de collecte du carburant à l'état liquide. L'organe de collecte des vapeurs est choisi et dimensionné pour permettre une collecte des hydrocarbures à courtes chaînes et de l'eau et leur séparation.

Ledit espace 107 de mélange est adapté pour pouvoir être partiellement rempli par un bain de liquide 30 inerte et renferme un organe 111 de mélange d'un flux de ladite dispersion de craquage, d'un flux de catalyseur(s) et de composé alcalin. L'organe 111 de mélange est positionné pour être en immersion dans le bain de liquide 30 inerte et présente une ouverture 114 supérieure débouchant dans le bain de liquide 30 inerte de sorte qu'un flux de liquide 30 inerte est introduit dans l'organe 111 de mélange par cette ouverture 114 sous l'action de premiers moyens 115 de pompage de ladite dispersion de craquage interposés en communication de fluide en aval de l'organe 111 de mélange et en amont de ladite chambre 106 de craquage catalytique. Les premiers moyens 115 de pompage permettent une introduction par aspiration de liquide 30 inerte dans l'organe 111 de mélange et la distribution par refoulement de ladite dispersion de craquage vers ladite chambre 106 de craquage catalytique. L'organe 111 de mélange peut être sous la forme d'un cylindre d'axe longitudinal positionné verticalement dans la cuve 101 et présentant, à son extrémité supérieure, l'ouverture 114 débouchant dans le bain de liquide 30 inerte et une ouverture 116 inférieure débouchant sur un conduit 117 d'amenée de ladite dispersion de craquage vers les premiers moyens 115 de pompage.

L'organe 111 de mélange comprend une entrée 108 d'une dispersion désoxygénée dudit matériau sec, une entrée 109 de catalyseur et de composé alcalin dans l'organe 111 de mélange. L'organe 111 de mélange comprend des moyens 118 de mélange de la dispersion désoxygénée, de catalyseur(s) et de composé(s) alcalin(s) comprenant des pales supportée par un arbre rotatif actionné en rotation par un moteur 119. L'organe 111 de mélange comprend également des moyens additionnels 120 de fragmentation du matériau solide à l'état divisé. Les moyens additionnels 120 de fragmentation sont actionnés en rotation par un moteur 121 couplé à un arbre d'axe coaxial avec l'arbre de couplage du moteur 119 aux moyens 118 de mélange.

Ledit espace 107 de mélange est conformé pour pouvoir contenir dans sa partie supérieure un volume 122 de composition gazeuse à une pression inférieure à la pression atmosphérique et s'étendant au contact du bain de liquide 30 inerte. Un tel volume 122 en dépression communique avec un dispositif 123 aspirant de mise en dépression du volume 122 et permettant une désoxygénation du bain de liquide 30 inerte.

Le dispositif 100 de production de carburant représenté schématiquement en figure 3 comprend également des moyens de séchage du matériau solide à l'état divisé comprenant un convoyeur 141 à vis équipé d'une trémie 142 de stockage et de distribution contrôlée d'un flux de matériau solide à l'état divisé dans le convoyeur 141 de séchage. Le convoyeur 141 de séchage est équipé d'une gaine 143 chauffante adaptée pour pouvoir chauffer et assécher le matériau solide à l'état divisé dans le convoyeur 141 de séchage. Le convoyeur 141 de séchage est également équipé de moyens 144 de collecte et de condensation de la vapeur d'eau formée lors de ce séchage. Le convoyeur 141 de séchage permet de former en sortie 145 du convoyeur 141 de séchage un matériau solide à l'état divisé d'humidité réduite.

Le dispositif 100 de production de carburant représenté schématiquement en figure 3 comprend également un dispositif 146 de dispersion dudit matériau sec dans un bain de liquide 30 inerte comprenant un convoyeur à enveloppe conique et à vis sans fin d'axe de rotation sensiblement vertical et dont l'extrémité 148 terminale est disposée pour introduire la dispersion dudit matériau sec au contact et dans le bain de liquide 30 inerte. Le dispositif 146 de dispersion est également équipé d'une gaine 147 de chauffage et de maintien de la dispersion dudit matériau sec à la température de séchage.

L'enveloppe conique du dispositif 146 de dispersion dudit matériau sec présente une entrée de liquide inerte en communication avec un circuit d'approvisionnement du dispositif 146 de dispersion en liquide inerte à partir du bain de liquide inerte exempt de matériau solide à l'état divisé dudit espace 107 de mélange. Ce circuit d'approvisionnement comprend des moyens 156 de pompage de liquide inerte et des conduits 158 d'acheminement de liquide inerte permettant de maintenir un niveau de liquide inerte sensiblement constant dans le dispositif 146 de dispersion.

Le dispositif 100 de production de carburant comprend également un convoyeur 149 de désoxygénation et de séchage de la dispersion du matériau solide à l'état divisé dans le liquide inerte. Un tel convoyeur 149 de désoxygénation est un convoyeur à vis sans fin présentant une gaine chauffante et équipé d'une cloche 150 en communication de fluide gazeux avec un dispositif 123 aspirant de mise en dépression de la cloche 150 et adapté pour mettre en contact le liquide 30 inerte circulant dans le convoyeur 149 de désoxygénation avec une composition gazeuse à une pression inférieure à la pression atmosphérique. L'extrémité terminale du convoyeur 149 de désoxygénation débouche dans l'organe 111 de mélange. Un tel convoyeur 149 de désoxygénation permet un dégazage au moins partiel de la dispersion de matériau solide à l'état divisé dans le liquide inerte et son séchage.

Ledit espace 105 de craquage est adapté pour pouvoir être partiellement rempli d'un bain de liquide 30 inerte et renferme un conduit ou dôme 127 de craquage de forme sensiblement cylindrique et d'axe longitudinal s'étendant verticalement dans ledit espace 105 de craquage. La partie inférieure du dôme 127 de craquage est positionnée pour pouvoir être immergée dans le bain de liquide 30 inerte et la partie supérieure du dôme 127 de craquage est positionnée pour pouvoir émerger du bain de liquide 30 inerte. Le dôme 127 de craquage présente dans sa partie inférieure une entrée 128 de ladite dispersion de craquage dans le dôme 127 en communication de fluide avec les premiers moyens 115 de pompage de telle sorte que les premiers moyens 115 de pompage permettent une introduction d'un flux de ladite dispersion de craquage en partie inférieure du dôme 127 de craquage. Les premiers moyens 115 de pompage sont adaptés pour pouvoir réguler le flux de ladite dispersion de craquage entrant dans le dôme 127 de craquage et dans ladite chambre 106 de craquage. Le dôme 127 de craquage forme dans sa partie inférieure un conduit 124 de chauffage du flux de ladite dispersion de craquage circulant dans le dôme 127 de craquage, le conduit 124 de chauffage étant équipé de premiers moyens 129 de chauffage du flux de ladite dispersion de craquage de façon à former un flux de ladite dispersion de craquage portée à une température inférieure à la température de craquage (la température de craquage étant comprise entre 240°C et 340°C -notamment entre 280°C et 340°C- selon le matériau solide à l'état divisé) de chaque composé hydrocarboné du matériau solide en entrée 133 de ladite chambre 106 de craquage.

Le dôme 127 de craquage présente dans sa partie intermédiaire une entrée 130 d'un flux de liquide inerte dans le dôme 127 de craquage, ce flux de liquide inerte étant refoulé dans le dôme 127 de craquage par des deuxièmes moyens 131 de pompage de liquide 30 inerte prélevé dans l'espace 107 de mélange. Les deuxièmes moyens 131 de pompage permettent une telle introduction d'un flux de liquide 30 inerte dans ladite chambre 106 de craquage par des orifices 135 dispersants et débouchant dans ladite chambre 106 de craquage.

Les deuxièmes moyens 131 de pompage sont adaptés pour pouvoir former à partir de liquide inerte exempt de matières solides s'étendant dans ledit espace 107 de mélange un flux de liquide 30 inerte et pour pouvoir réguler le flux de liquide inerte entrant dans le dôme 127 de craquage. Le dôme 127 de craquage comprend également des deuxièmes moyens 132 de chauffage du flux de liquide inerte adaptés pour chauffer le flux de liquide inerte refoulé dans ladite chambre 106 de craquage par les moyens 131 de pompage et pour former un flux de liquide inerte chaud préalablement à son mélange avec ladite dispersion de craquage. Les deuxièmes moyens 132 de chauffage sont disposés de façon à chauffer le flux de liquide inerte et de façon à ne pas chauffer le flux de ladite dispersion de craquage s'écoulant dans le conduit 124 de chauffage.

Ladite chambre 106 de craquage présente des moyens de mélange du flux de ladite dispersion de craquage et du flux de liquide inerte présentant des pales 134 de mélange mises en rotation par un moteur 136 couplé à un arbre 137 de transmission.

Le dôme 127 de craquage présente dans sa partie supérieure et s'étendant en regard d'une ouverture 138 débouchante de ladite chambre 106 de craquage, un dispositif 139 de fragmentation d'une mousse de craquage formée par craquage catalytique de ladite dispersion de craquage dans ladite chambre 106 de craquage, comprenant des moyens de centrifugation de la mousse et de fragmentation de la mousse projetée par les moyens de centrifugation traversant une grille 140 de fragmentation.

Dans un dispositif 100 selon l'invention, le dispositif 139 de fragmentation produit une composition mixte solide/liquide qui tombe par gravité dans le bain de liquide 30 inerte de l'espace 105 de craquage. Les deuxièmes moyens 131 de pompage d'un flux de liquide 30 inerte et/ou de liquide inerte régénéré dans ledit espace 107 de mélange et en introduisant ce flux dans le dôme 127 de l'espace 107 de mélange et les premiers moyens 115 de pompage, en permettant un prélèvement de liquide 30 inerte dans ledit espace 107 de mélange via l'organe 111 de mélange et en refoulant ladite dispersion 40 de craquage dans ledit espace 105 de craquage contribuent à la formation d'une circulation et d'une régénération de liquide inerte entre ledit espace 105 de craquage et ledit espace 107 de mélange et d'une circulation de liquide inerte et de matériau solide à l'état divisé entre ledit espace 107 de mélange et ledit espace 105 de craquage. Il en résulte une production en continu de carburant.

Dans un dispositif 100 de production de carburant selon l'invention, la cloison 104 verticale ménage dans sa partie inférieure une communication entre ledit espace 107 de mélange et ledit espace 105 de craquage. La cloison 104 verticale formant un organe 151 de séparation solide/liquide du liquide inerte et de matières solides (matières solides de départ et/ou formées lors du craquage catalytique) permet l'établissement et le guidage, dans ledit espace 105 de craquage, d'un flux vertical (descendant, s'écoulant sensiblement du haut vers le bas de la cuve) de liquide inerte chargé de matières solides issues du craquage catalytique et l'établissement, dans ledit espace 107 de mélange, d'un flux vertical (ascendant, s'écoulant sensiblement du bas vers le haut de la cuve) de liquide 30 inerte sensiblement exempt de matières solides et permettant une décantation de matières solides dans une zone 157 de décantation s'étendant au fond de la cuve 101 lors de la réorientation du flux et à la régénération de liquide inerte. L'organe 151 de séparation solide/liquide du liquide inerte et de matières solides peut être un organe de séparation solide/liquide par décantation des matières solides, la séparation solide/liquide étant obtenue par entrainement par sédimentation des matières solides de densité supérieure à la densité du liquide inerte et par la réorientation du flux de liquide inerte. Le dispositif selon l'invention permet la décantation des matières solides au fond de la cuve 101 et leur évacuation par tout moyen connu.

Un dispositif 100 de production de carburant selon l'invention comprend également une entrée 159 de liquide inerte -notamment de liquide inerte recyclé- en vue du maintien du niveau de liquide inerte dans la cuve 101.

Un dispositif de production de carburant selon l'invention est adapté pour permettre une circulation d'une composition fluide comprenant un liquide inerte dans une cuve unique thermiquement isolée entre :
- un espace de craquage de la cuve unique dans lequel au moins un composé hydrocarboné d'un matériau solide à l'état divisé de la composition fluide est transformé au moins pour partie en carburant par craquage catalytique ;
- un espace de séparation solide/liquide de matières solides (matériau solide à l'état divisé et/ou matières solides formées lors du craquage catalytique) et de liquide inerte recyclé issu de cette séparation ;
- un espace de mélange de matériau solide à l'état divisé contenant au moins un composé hydrocarboné, de catalyseur, de composé alcalin et de liquide inerte recyclé de façon à former la composition fluide en vue de son craquage catalytique.

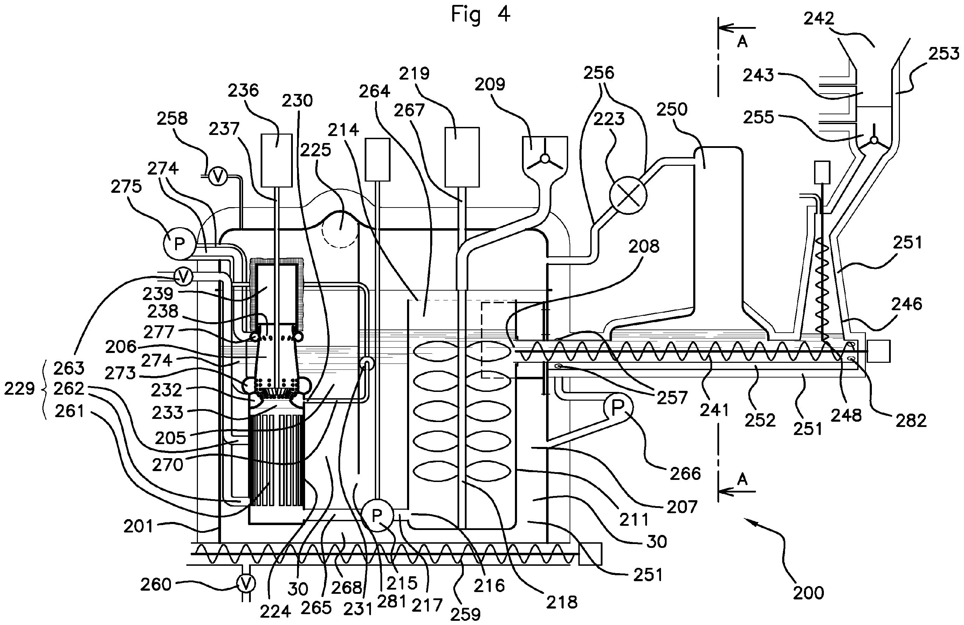

Une deuxième variante particulière d'un dispositif 200 de production de carburant par craquage catalytique d'un matériau solide hydrocarboné selon l'invention est représentée schématiquement en figure 4. Le dispositif 200 comprend une cuve 201 en matériau rigide et adaptée pour contenir un bain de liquide 30 inerte. La cuve 201 présente une enveloppe 251 externe d'un matériau thermiquement isolant et permet de limiter les pertes d'énergie calorifique des fluides circulant dans l'ensemble de la cuve 201. La cuve 201 présente une cloison 204 interne verticale de séparation partielle de l'espace 205 de craquage comprenant la chambre 206 de craquage d'une part et l'espace 207 de mélange et de préparation de ladite dispersion de craquage, d'autre part.

L'espace 205 de craquage présente une ouverture 225 supérieure débouchante à pression atmosphérique et adaptée pour coopérer avec un organe de collecte (non représenté en figure 4) des vapeurs formées lors de la réaction de craquage catalytique et de condensation fractionnée de ces vapeurs, ledit espace 205 de craquage comprenant en partie supérieure une poche gazeuse à pression atmosphérique. La cloison 204 permet, lorsque la cuve 201 contient du liquide inerte, de former dans l'espace 207 de mélange une poche gazeuse piégée de façon étanche au-dessus du liquide 30 inerte et susceptible d'être placée en dépression, c'est-à-dire à une pression inférieure à la pression atmosphérique, au moyen d'un dispositif 223 aspirant.

La cloison 204 forme -en combinaison avec des premiers moyens 215 de pompage de ladite dispersion de craquage dans l'espace 207 de mélange, de refoulement de ladite dispersion de craquage dans l'espace 205 de craquage et d'établissement d'une circulation de composition liquide comprenant du liquide inerte dans la cuve 201- un organe 281 de séparation solide/liquide du liquide inerte et de matières solides (matières solides de départ et/ou formées lors du craquage catalytique) par décantation.

Dans le mode de réalisation selon l'invention représenté en figure 4, la cuve 201 du dispositif 200 de production de carburant comprend un fond présentant une pente de guidage des matières solides décantées dans une zone 268 de décantation vers un collecteur 259 -notamment un convoyeur à vis sans fin- de guidage des matières solides décantées vers une vanne 260 d'évacuation.

Ledit espace 207 de mélange renferme un organe 211 de mélange et de préparation d'une dispersion de craquage, positionné pour être immergé partiellement dans le bain de liquide 30 inerte de sorte que le bain de liquide 30 inerte échange de la chaleur avec l'organe 211 de mélange. L'organe 211 de mélange présente une ouverture 214 supérieure émergeant du bain de liquide 30 inerte et formant une embouchure 264 de réception d'une composition comprenant du catalyseur et du composé alcalin contenue dans un réservoir 209.

L'organe 211 de mélange présente également une entrée 208 d'une dispersion de matériau solide hydrocarboné -notamment de matériau solide hydrocarboné déshydraté et désoxygéné- dans du liquide 30 inerte de façon à former ladite dispersion de craquage par mélange de la dispersion de matériau solide hydrocarboné et de la composition de catalyseur et de composé alcalin. En mode de fonctionnement du dispositif 200 selon l'invention, l'entrée 208 de dispersion de craquage s'étend en dessous du niveau de liquide inerte de l'organe 211 de mélange. L'entrée 208 de la dispersion de matériau solide hydrocarboné est en communication de fluide avec un convoyeur 241 d'acheminement de la dispersion de matériau solide hydrocarboné dans du liquide inerte vers l'entrée 208 de l'organe 211 de mélange. Le convoyeur 241 comprend une vis sans fin coopérant avec une auge de convoyage ouverte sur sa face supérieure et présentant sur sa face inférieure une gaine 252 externe chauffante parcourue par un flux de liquide inerte chaud prélevé dans l'espace 207 de mélange et introduit dans la gaine 252 externe chauffante via des orifices 257 de distribution. Ce flux de liquide inerte chaud est entrainé dans la gaine 252 externe chauffante et au contact sur la longueur du convoyeur par une pompe 266 de circulation de liquide inerte et est introduit dans le volume interne du convoyeur 241 par des ouvertures 282 d'introduction de ce flux de liquide inerte chaud (de l'ordre de 260°C) dans le convoyeur 241 positionnées sensiblement à l'une des extrémités longitudinales du convoyeur 241. De cette façon, le liquide inerte chaud transmet de la chaleur au convoyeur 241 et à la dispersion de matériau solide hydrocarboné circulant dans le convoyeur 241 et maintien la température de la dispersion, puis contribue à former la dispersion de matériau solide hydrocarboné par mélange avec du matériau solide hydrocarboné.

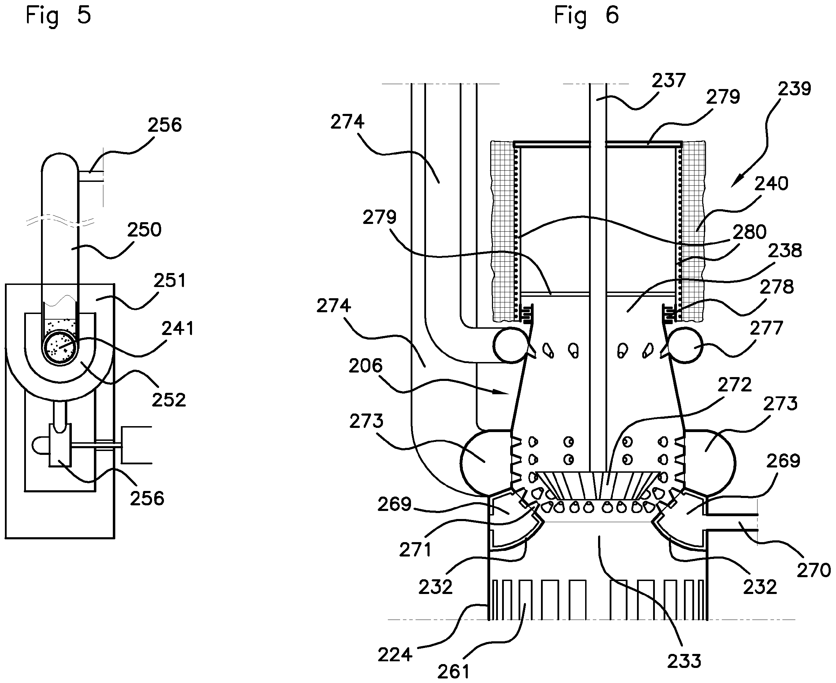

La vis sans fin du convoyeur 241 est sensiblement horizontale et s'étend en dessous du niveau de liquide inerte de l'espace 207 de mélange de sorte qu'aucun moyen spécifique n'est nécessaire pour l'approvisionnement en liquide inerte du convoyeur 241 à vis. Le convoyeur 241 à vis comprend également une cloche 250 de dégazage -notamment de désoxygénation- de la dispersion de matériau solide hydrocarboné dans le liquide inerte maintenue en dépression -c'est-à-dire à une pression inférieure à la pression atmosphérique- au moyen d'un dispositif 223 aspirant communiquant avec la cloche 250 de désoxygénation et avec l'espace 207 de mélange par des conduits 256. Une telle cloche 250 de dégazage -notamment de désoxygénation- permet la formation d'une dispersion dégazée -notamment au moins partiellement désoxygénée- et asséchée de matériau solide hydrocarboné dans le liquide inerte. Une vue en coupe transversale du convoyeur 241 au niveau de la cloche 250 de dégazage est représentée en figure 5.

Le dispositif 200 de production de carburant représenté schématiquement en figure 4 comprend également un dispositif 246 d'acheminement d'un matériau solide hydrocarboné à l'état divisé dans le convoyeur 241 à vis à partir d'une trémie 242 de chargement du matériau solide hydrocarboné à l'état divisé. La trémie 242 de chargement du matériau solide hydrocarboné comprend un organe 243 de chauffage du matériau solide hydrocarboné à une température par exemple comprise entre 50°C et 100°C (notamment 80°C) et une gaine 253 thermiquement isolante. La trémie 242 de chargement comprend également des moyens 255 de contrôle du flux de matériau solide hydrocarboné introduit dans le dispositif 200 de production de carburant. Le dispositif 246 d'acheminement peut être un convoyeur à vis sans fin présentant un fourreau de forme sensiblement conique et une vis sans fin d'axe de rotation sensiblement vertical et dont l'extrémité 248 terminale est disposée pour pouvoir approvisionner le convoyeur 241 à vis en matériau solide hydrocarboné à l'état divisé.

L'organe 211 de mélange du dispositif 200 selon l'invention comprend des moyens 218 de mélange d'un flux de dispersion dégazée -notamment désoxygénée- de matériau solide hydrocarboné dans le liquide inerte et de la composition de catalyseur(s) et de composé(s) alcalin(s) formant ladite dispersion de craquage. Les moyens 218 de mélange présentent des pales ou des couteaux supportés par un arbre 267 entrainé en rotation par un moteur 219. Tout autre moyen de mélange et/ou de déchiquetage peut être utilisé. Le dispositif 200 de production de carburant comprend des premiers moyens 215 de pompage de ladite dispersion de craquage à partir de l'organe 211 de mélange et de refoulement de ladite dispersion de craquage vers l'espace 205 de craquage. Ladite dispersion de craquage est entrainée en amont des premiers moyens 215 de pompage dans un conduit 217 communiquant avec une ouverture 216 inférieure de l'organe 211 de mélange et en aval des premiers moyens 215 de pompage par un conduit 265 débouchant dans un conduit 224 de chauffage s'étendant en partie inférieure de l'espace 205 de craquage.

Le dispositif 200 selon l'invention comprend des moyens 229 de chauffage primaire de ladite dispersion de craquage à une température inférieure à la température de craquage. Dans la variante représentée en figure 4, les moyens 229 de chauffage primaire comprennent un échangeur 261 de chaleur adapté pour s'étendre dans le co9nduit 224 de chauffage au contact du flux de ladite dispersion de craquage. L'échangeur 261 de chaleur est conformé pour permettre un échange de chaleur entre un fluide caloporteur circulant dans l'échangeur 261 de chaleur et ladite dispersion de craquage. Le fluide caloporteur circule dans un conduit 262 de circulation du fluide caloporteur entre une entrée et une sortie de l'échangeur 261 de chaleur et une unité de chauffage (non représentée en figure 4) du fluide caloporteur. Le conduit 262 de circulation comprend une électrovanne 263 de régulation du débit du flux de fluide caloporteur en fonction de la température et du débit du flux de ladite dispersion de craquage circulant dans le conduit 224 de chauffage. Les moyens 229 de chauffage primaire sont adaptés pour pouvoir chauffer ladite dispersion de craquage à une température (notamment une température de l'ordre de 240°C à 280°C) inférieure à la température de craquage du matériau solide -notamment du déchet- à l'état divisé contenant au moins un composé hydrocarboné.

Le dispositif 200 selon l'invention représenté en figure 4 comprend des moyens 232 de chauffage secondaires de liquide inerte adaptés pour pouvoir chauffer un flux de liquide inerte et placer ce flux de liquide inerte chaud au contact de ladite dispersion de craquage. Les moyens 232 de chauffage secondaires de liquide inerte peuvent être de toute nature. Il peut s'agir d'un échangeur de chaleur comprenant un circuit de fluide caloporteur porté à une température choisie pour pouvoir (selon les débits respectifs du fluide caloporteur et du liquide inerte) élever la température d'un flux de liquide inerte à une température suffisante (par exemple de l'ordre de 330°C) pour élever la température de ladite dispersion de craquage à une valeur de l'ordre de 260°C à 300°C'(notamment de l'ordre de 280°C). Les moyens 232 de chauffage secondaires de liquide inerte sont agencés de façon à ne pas chauffer le flux de ladite dispersion de craquage s'écoulant dans le conduit 224 de chauffage de sorte qu'ils ne conduisent pas à la formation de coke.

Le dispositif 200 selon l'invention comprend des moyens 231 de pompage d'un flux de liquide inerte exempt de matériau solide à l'état divisé et de catalyseur dans l'espace 207 de mélange et de refoulement de ce flux de liquide inerte au contact des moyens 232 de chauffage secondaires dans lesquels le flux de liquide inerte est réchauffé et introduit sous pression dans la chambre 206 de craquage. Le mélange du flux de ladite dispersion de craquage et du flux de liquide inerte chaud dans la chambre 206 de craquage permet que ce mélange atteigne sensiblement la température de craquage sans que ladite dispersion de craquage ne soit mise en contact avec une paroi chauffée à une température propre à conduire à la formation de coke.

Les moyens 232 de chauffage secondaires de liquide inerte sont disposés sur la face interne d'une enceinte formant un premier tore 269 périphérique de distribution du flux de liquide inerte dans la chambre 206 de craquage dont un détail est représenté en figure 6. Le tore 269 de distribution est en communication avec les moyens 231 de pompage de flux de liquide inerte via un conduit 270 d'amenée de liquide inerte dans le tore 269 de distribution et présente des orifices 271 d'injection de liquide inerte chaud débouchants dans la chambre 206 de craquage et au contact de ladite dispersion de craquage ce par quoi ladite dispersion de craquage atteint quasiment la température de craquage d'au moins un composé hydrocarboné. Il résulte de la réaction de craquage une production d'hydrocarbures à l'état gazeux, de dihydrogène (H₂) à l'état gazeux, de dioxyde de carbone et de vapeur d'eau dans ladite dispersion de craquage conduisant à la formation d'une mousse en expansion avec la formation de ces composés à l'état gazeux.

La chambre 206 de craquage comprend une turbine 272 de mélange et d'entrainement de ladite dispersion de craquage et de la mousse en expansion en partie haute de la chambre de craquage. La turbine 272 est montée solidaire d'un arbre 237 rotatif couplé à un moteur 236 d'entrainement en rotation à une vitesse de l'ordre de 3 tours par seconde.

Dans une variante représentée en figure 4 et en figure 6, la chambre 206 de craquage du dispositif 200 de production de carburant comprend un tore 273 périphérique inférieur de distribution d'une composition gazeuse oxygénée dans la chambre 206 de craquage. Le tore 273 périphérique inférieur est en communication avec une soufflerie 275 de composition gazeuse oxygénée via un conduit 274 d'amenée de composition gazeuse oxygénée dans le tore 273 périphérique inférieur et présente des lumières 276 d'injection de composition gazeuse oxygénée dans la chambre 206 de craquage. Il résulte de cet apport d'oxygène une réaction exothermique avec le dihydrogène à l'état gazeux produit lors de l'initiation du craquage catalytique compensant au moins pour partie l'enthalpie (endothermique) de vaporisation du carburant. La réaction de craquage catalytique se poursuit sans formation de coke au contact d'une paroi chaude.

Dans la variante représentée en figure 4 et en figure 6, la chambre 206 de craquage du dispositif 200 de production de carburant comprend un tore 277 périphérique supérieur de distribution de composition gazeuse oxygénée dans la chambre 206 de craquage. Le tore 277 périphérique supérieur est en communication avec la soufflerie 275 de composition gazeuse oxygénée via un deuxième conduit 274 d'amenée de composition gazeuse oxygénée dans le tore 277 périphérique supérieur qui présente des lumières d'injection de composition gazeuse oxygénée dans la chambre 206 de craquage. Il résulte de cet apport de composition gazeuse oxygénée -notamment de l'oxygène de cette composition gazeuse- une réaction exothermique avec le dihydrogène à l'état gazeux produit lors de la poursuite du craquage catalytique compensant au moins pour partie l'enthalpie de vaporisation (endothermique) du carburant et permettant de maintenir, voire d'augmenter, la température dans la chambre de craquage à une température de l'ordre de 330°C à 340°C de vaporisation totale des alcanes du carburant. La réaction de craquage catalytique se poursuit sans formation de coke au contact d'une paroi portée à une température supérieure à 360°C.

Dans la variante d'un dispositif 200 de production de carburant représentée en figure 4 et en figure 6, la chambre 206 de craquage immobile en rotation présente dans sa partie supérieure une ouverture 238 supérieure débouchant dans un dispositif 239 rotatif de fragmentation de la mousse de craquage entrainée par la turbine 272. Le dispositif 239 rotatif de fragmentation est monté solidaire d'un arbre rotatif -par exemple de l'arbre 237 rotatif de la turbine 272 ou d'un arbre rotatif coaxial avec l'arbre 237 rotatif de la turbine 272- entrainé en rotation par un dispositif 236 moteur d'entrainement. Le dispositif 239 rotatif de fragmentation et la chambre 206 de craquage présentent des paliers 278 complémentaires de guidage en rotation du dispositif 239 rotatif de fragmentation par rapport à la chambre 206 de craquage. Le dispositif 239 rotatif de fragmentation présente des expansions 279 radiales de solidarisation et de centrage du dispositif 239 rotatif de fragmentation et de l'arbre 237 rotatif. Ces expansions 279 radiales peuvent former des aubages d'entrainement de la mousse de craquage à partir de la chambre 206 de craquage vers le dispositif 239 rotatif de fragmentation. Le dispositif 239 rotatif de fragmentation forme un tambour d'axe de rotation vertical dont la paroi cylindrique est ajourée. La paroi cylindrique peut être formée d'une pluralité de lattes 280 parallèles et espacées les unes aux autres ménageant des passages de fragmentation pour la mousse de craquage entrainée vers l'extérieur du tambour par la rotation du dispositif 239 rotatif. Le dispositif 239 rotatif de fragmentation peut également comprendre une grille 240 externe présentant un maillage adapté pour permettre une fragmentation de la mousse de craquage projetée au travers de ce maillage. Une telle fragmentation de la mousse de craquage permet de libérer les composés gazeux de la mousse de craquage et leur condensation ultérieure dans l'organe de collecte (non représenté en figures 4 et 5). Le dispositif 239 rotatif de fragmentation comprend également une plaque 279 de fermeture de l'extrémité longitudinale supérieure du tambour solidaire des lattes 280 parallèles et de l'arbre 237 rotatif.

Un dispositif 200 de production de carburant représenté en figure 4 comprend un dispositif de maintien du niveau de liquide 30 inerte dans la cuve 201. Un tel dispositif peut comprendre une pompe de complémentation de liquide 30 inerte et/ou une vanne d'entrée 258 de liquide 30 inerte dans la cuve 201. Le dispositif 200 de production de carburant comprend également des moyens de détection du niveau de liquide 30 inerte dans la cuve 201 et de déclanchement de la vanne d'entrée et/ou de la pompe lorsque le niveau de liquide inerte est inférieur à une valeur seuil de ce niveau.

Un dispositif de production de carburant selon l'invention est adapté pour permettre :
- un contrôle du débit du flux et de la température de ladite dispersion de craquage ;
- un contrôle du débit du flux et de la température du liquide inerte, et ;
- le cas échéant, le débit du flux de composition gazeux oxygénée.

### EXEMPLE 1 - Traitement d'ordures ménagères

Des ordures ménagères issues d'une collecte urbaine comprennent typiquement en moyenne de l'ordre de 32% (en masse) de matières putrescibles (c'est-à-dire de biomasse d'origine animale ou végétale), de l'ordre de 45% (en masse) de matières combustibles (dont 34% de matières essentiellement cellulosiques et 11% de matériaux synthétiques polymériques ou composites) et de l'ordre de 23% (en masse) de matière inertes (verres, métaux, minéraux). Après élimination des matières inertes de ces ordures ménagères, on soumet ces dernières à une étape de compression dans une presse telle que décrite dans EP 0 563 173. Lors de cette compression, les ordures ménagères se séparent en une fraction fluant au travers des filières de la presse sous la forme d'une pulpe organique contenant une proportion massique de 96 à 97% de matière putrescible et en une fraction, dit déchet ménager solide, retenue dans la presse et contenant de l'ordre de 70% de matières cellulosiques (notamment des papiers, cartons, textiles sanitaires) et de l'ordre de 30% de déchets synthétiques polymériques. Ledit déchet ménager solide comprend également de l'ordre de 3% de matières inertes incombustibles (verres, métaux, minéraux divers et autres ayant échappé au tri initial) et de l'ordre de 4% de matière organique putrescible. Le taux d'humidité relative dudit déchet ménager solide varie d'une valeur de l'ordre de 10% immédiatement en sortie de la presse et se stabilise à une valeur de l'ordre de 28% après stockage, par ré-humidification naturelle par l'humidité de l'air. Ledit déchet ménager solide se présente, en sortie d'un extrudeur ou d'une presse telle que décrite dans EP 0 563 173, sous la forme de blocs de feuillets compacts présentant une densité sensiblement de l'ordre de 0,85 et est ininflammable en masse compacte. Ce déchet ménager solide est morcelable, notamment par lacération. On forme un déchet solide à l'état divisé formé de particules présentant une plus grande dimension inférieure ou égale à de l'ordre de 20 mm et au moins une plus petite dimension inférieure à 3 mm. En outre, un tel déchet ménager solide ne comprend que de l'ordre de 3% de matière inerte (ou refus, tels que des graviers, du verre, autres...) qui n'est pas susceptible de subir un craquage catalytique selon l'invention.

Dans une étape préliminaire d'un procédé selon l'invention, on introduit le déchet solide à l'état divisé dans un convoyeur, dit convoyeur de séchage, à vis rotative dans une enveloppe externe portée à une température adaptée pour permettre son chauffage, une évaporation d'au moins une partie de son humidité et son séchage au moins partiel. Ledit convoyeur de séchage présente également une colonne de condensation de la vapeur d'eau libérée à partir du déchet solide à l'état divisé. Il résulte de cette étape de chauffage un déchet, dit déchet sec, présentant un pourcentage d'humidité comprise entre 8 % et 10% en sortie dudit convoyeur de séchage et adapté pour pouvoir être soumis ultérieurement à un craquage catalytique selon l'invention.

On mélange ensuite une quantité dudit déchet sec et une quantité de liquide inerte vis-à-vis du craquage catalytique. On réalise ce mélange au moyen d'un convoyeur à vis s'étendant en sortie dudit convoyeur de séchage, dont l'axe de rotation de la vis est sensiblement vertical et le sens de rotation de la vis est adapté de sorte que ledit convoyeur de transfert achemine dudit déchet sec vers le bas jusqu'à un bain de liquide inerte, la vis du convoyeur de transfert plongeant dans le bain de liquide inerte de façon à introduire le déchet asséché dans le bain de liquide inerte. Cette configuration permet en particulier de favoriser la dispersion dudit déchet sec dans le bain de liquide inerte et d'éviter une occlusion du dispositif par bourrage lors du contact dudit déchet sec et du liquide inerte.

Dans un procédé selon l'invention, on soumet le mélange à un chauffage à la température de 150°C lors de son transfert dans un convoyeur une phase de dégazage sous pression inférieure à la pression atmosphérique lors d'un chauffage du mélange

On réalise un traitement par craquage catalytique de déchet asséché de façon à fabriquer du carburant avec un débit de l'ordre de 1000 L/h correspondant à un débit de production de carburant de l'ordre de 0,24 Kg/sec pour une densité de carburant de 0,86. Le déchet asséché comprend de l'ordre de 70% (en masse de déchet sec) de déchets cellulosiques (tels que par exemple du papier, du carton, des textiles sanitaires) et de l'ordre de 30% (en masse de déchet sec) de déchets synthétiques polymériques, y compris des déchets synthétiques composites.

À titre indicatif uniquement, le déchet asséché présente une composition élémentaire, exprimée en pourcentage massique du déchet sec, est donnée au tableau 1 ci-après, cette composition élémentaire dépendant essentiellement de l'origine et de la nature du déchet.

**Tableau 1**

| Carbone | H₂ | Soufre | O₂ | N₂ | Cℓ |
|---|---|---|---|---|---|
| 53,5 % | 7,7 % | 0,5 % | 37 % | 0,7 % | 0,6 % |

Le rendement de craquage des déchets cellulosiques est de l'ordre de 32% et le rendement de craquage des déchets synthétiques polymériques est de l'ordre de 80%. Le rendement global moyen de craquage de ce déchet est de l'ordre de 46,4%.

Les débits massiques des réactifs (entrants) et du carburant produit sont donnés au tableau 2 ci-après.

**Tableau 2**

| Débit des entrants, Kg/sec | | | | Total Entrants | Débit Carburant, Kg/sec |
|---|---|---|---|---|---|
| Déchet | Huile | Chaux | Catalyseur | | |
| 0,52 | 3,75 | 0,017 | 0,005 | 4,3 | 0,24 |

L'invention peut faire l'objet de nombreuses variantes et applications autres que celles décrites ci-dessus. En particulier, il va de soi que sauf indication contraire, les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, le dimensionnement, l'organisation dans l'espace et la conception des différents éléments constitutifs du dispositif sont sujets à des infinités de variantes.

## Revendications

1. Procédé de production de produits énergétiques par craquage catalytique d'un matériau solide hydrocarboné, dans lequel on chauffe une dispersion, dite dispersion (40) de craquage, comprenant :
∘ un matériau (1) solide à l'état divisé contenant au moins un composé hydrocarboné ;
∘ au moins un catalyseur (10) de craquage catalytique ;
∘ au moins un composé (20) alcalin, et ;
∘ un liquide (30) inerte vis-à-vis du craquage catalytique ;
de façon que ladite dispersion (40) de craquage atteigne une température, dite température de craquage, comprise entre 240°C et 340°C, apte à permettre un craquage catalytique d'au moins un composé hydrocarboné de ladite dispersion (40) de craquage, entrainant une production d'hydrocarbures, dits hydrocarbures (50) à chaînes courtes, de plus faible masse moléculaire que ledit composé hydrocarboné ;
**caractérisé en ce qu'**on atteint ladite température de craquage par mélange d'une quantité de ladite dispersion (40) de craquage et d'une quantité de liquide (30) inerte sensiblement exempt de matériau (1) solide à l'état divisé et de catalyseur (10), le liquide inerte étant porté à une température inférieure à 360°C et supérieure à ladite température de craquage, ledit mélange étant réalisé de telle sorte que le mélange formé atteigne une température au moins égale à ladite température de craquage et inférieure à une température de formation de coke, et **en ce qu'**on apporte à ladite dispersion (40) de craquage à ladite température de craquage, une quantité d'une composition gazeuse oxygénée apte à provoquer une réaction exothermique avec au moins une partie de dihydrogène produit lors du craquage.

2. Procédé selon la revendication 1, **caractérisé en ce qu'**on réalise une étape (3) de séchage du matériau (1) solide à l'état divisé lors de laquelle on maintient une dispersion du matériau (1) solide à l'état divisé dans du liquide inerte à une température supérieure à 100°C de façon à former une dispersion d'un matériau, dit matériau (4) sec, solide à l'état divisé présentant un taux d'humidité inférieur à 10% dans du liquide inerte.

3. Procédé selon l'une des revendications 1 ou 2, **caractérisé en ce qu'**on réalise une étape (7) de désoxygénation du matériau (1) solide à l'état divisé lors de laquelle une dispersion du matériau (1) solide à l'état divisé dans du liquide inerte à la température de craquage est maintenue en contact avec une atmosphère gazeuse présentant une valeur de pression partielle en oxygène inférieure à la pression partielle en oxygène de l'air atmosphérique de façon à former une dispersion (8) désoxygénée du matériau (1) solide à l'état divisé dans le liquide (30) inerte.

4. Procédé selon la revendication 3, **caractérisé en ce qu'**on réalise une étape (11) de mélange en flux continu dans laquelle on met en contact et on mélange :
- un flux de la dispersion (8) désoxygénée dudit matériau (4) sec dans le liquide (30) inerte ;
- au moins un catalyseur (10) de craquage catalytique, et ;
- au moins un composé (20) alcalin, et ;
- un flux de liquide (30) inerte ;
de façon à former un flux de ladite dispersion (40) de craquage présentant une température inférieure à ladite température de craquage et dans laquelle au moins un catalyseur (10) est en contact avec au moins un composé hydrocarboné du matériau (1) solide à l'état divisé.

5. Procédé selon la revendication 4, **caractérisé en ce qu'**on chauffe un flux de liquide (30) inerte de façon que le liquide (30) inerte de ce flux atteigne une température supérieure à ladite température de craquage.

6. Procédé selon la revendication 5, **caractérisé en ce qu'**on choisit et on ajuste :
- la température du flux de liquide (30) inerte,
- la température du flux de ladite dispersion (40) de craquage,
- un débit du flux de liquide (30) inerte, et
- un débit du flux de ladite dispersion (40) de craquage ;
de façon que la température du mélange de ladite dispersion (40) de craquage et du liquide (30) inerte atteigne une température au moins égale à la température de craquage d'au moins un composé hydrocarboné du matériau solide à l'état divisé et inférieure à la température de formation de coke.

7. Procédé selon l'une des revendications 1 à 6, **caractérisé en ce que** ladite dispersion (40) de craquage portée à une température au moins égale à ladite température de craquage formant une mousse, dite mousse (43) de craquage, du fait de la réaction de craquage, on soumet ladite mousse (43) de craquage à une étape (16) de centrifugation par laquelle on réalise une séparation d'une phase (17) gazeuse et d'une composition (18) mixte solide/liquide formée d'une dispersion de matières (21) solides issues du craquage dans le liquide (30) inerte.

8. Procédé selon la revendication 7, **caractérisé en ce qu'**on réalise une condensation de la phase (17) gazeuse dans des conditions propres à former les produits énergétiques.

9. Procédé selon l'une des revendications 7 ou 8, **caractérisé en ce qu'**on soumet la composition (18) mixte solide/liquide issue de l'étape (16) de centrifugation à une étape (19) de séparation liquide/solide dans laquelle on forme du liquide (30) inerte sensiblement exempt de matières (21) solides, puis on recycle le liquide (30) inerte.

10. Dispositif (100, 200) de production de produits énergétiques par craquage catalytique d'un matériau solide hydrocarboné, comprenant :
- une chambre, dite chambre (106, 206) de craquage, conformée pour permettre un mélange d'un flux d'un liquide inerte vis-à-vis du craquage catalytique et d'un flux d'une dispersion, dite dispersion (40) de craquage, comprenant :
∘ un matériau solide à l'état divisé contenant au moins un composé hydrocarboné ;
∘ au moins un catalyseur de craquage catalytique, et ;
∘ au moins un composé alcalin ;
dispersés dans du liquide inerte ;
ladite chambre (106, 206) de craquage présentant :
▪ une première entrée (133, 233) du flux de ladite dispersion de craquage à une température inférieure à la température de craquage catalytique de chaque composé hydrocarboné du matériau solide à l'état divisé ;
▪ une deuxième entrée (130, 230) du flux de liquide inerte à une température supérieure à la température de craquage catalytique d'au moins un composé hydrocarboné du matériau solide à l'état divisé ;
▪ des moyens (134, 272) de mélange du flux de ladite dispersion de craquage et du flux de liquide inerte dans ladite chambre (106, 206) de craquage ;
▪ au moins une ouverture (138, 238) d'échappement de ladite dispersion de craquage sous forme d'une mousse, dite mousse de craquage, comprenant des hydrocarbures formés par craquage catalytique ;
- des premiers moyens (129, 229) de chauffage du flux de ladite dispersion de craquage à une température inférieure à la température de craquage ;
- des deuxièmes moyens (132, 232) de chauffage du flux de liquide inerte à une température supérieure à la température de craquage catalytique d'au moins un composé hydrocarboné du matériau solide à l'état divisé, et ;
- au moins un dispositif (273, 277) d'introduction d'une composition gazeuse oxygénée dans ladite chambre (106) de craquage.

11. Dispositif selon la revendication 10, **caractérisé en ce qu'**il comprend une cuve (101, 201) unique isolée thermiquement et adaptée pour pouvoir contenir un bain de liquide inerte et renfermant :
- ladite chambre (106, 206) de craquage;
- au moins un dispositif, dit conduit (111, 211) de mélange, de mise en contact et de mélange :
∘ d'un flux d'une dispersion de matériau hydrocarboné dans du liquide inerte ;
∘ d'au moins un catalyseur, et ;
∘ d'au moins un composé alcalin, et ;
∘ d'un flux de liquide inerte formé à partir du bain de liquide inerte ;
adapté pour former un flux de ladite dispersion de craquage à une température inférieure à ladite température de craquage ;
- au moins un organe (151, 281) de séparation liquide/solide de matières solides issues du craquage catalytique et de liquide inerte ;
- une première pompe (115, 215) interposée entre ledit conduit (111, 211) de mélange et ladite chambre (106, 206) de craquage et adaptée pour délivrer le flux de ladite dispersion de craquage dans ladite chambre (106, 206) de craquage via les premiers moyens (129, 229) de chauffage ;
- une deuxième pompe (131) interposée entre l'organe (151, 281) de séparation liquide/solide et ladite chambre (106, 206) de craquage et adaptée pour délivrer le flux de liquide inerte exempt de matières solides dans ladite chambre (106, 206) de craquage via les deuxièmes moyens (132, 232) de chauffage.

12. Dispositif selon l'une des revendications 10 ou 11, **caractérisé en ce qu'**il comprend, surmontant au moins une ouverture (138, 238) de ladite chambre (106, 206) de craquage, un organe (139, 239) de centrifugation d'une mousse, dite mousse de craquage, formée par craquage catalytique d'au moins un composé hydrocarboné du matériau solide à l'état divisé, adapté pour séparer une phase gazeuse contenant le produit énergétique et une composition mixte solide/liquide formée d'une dispersion de matières solides issues du craquage dans le liquide inerte.

13. Dispositif selon l'une des revendications 10 à 12, **caractérisé en ce qu'**il est muni d'un dispositif de condensation desdits hydrocarbures à courtes chaînes à l'état gazeux et de leur conversion en produit énergétique liquide.

14. Dispositif selon l'une des revendications 10 à 13, **caractérisé en ce qu'**il comprend une presse de compression d'ordures ménagères à une pression au moins égale à 750 bars et d'extrusion du matériau solide hydrocarboné.

## Patentansprüche

1. Verfahren zur Herstellung von Energieprodukten durch katalytisches Cracken eines festen Kohlenwasserstoffmaterials, bei dem eine Dispersion, bezeichnet als Crackdispersion (40), umfassend:
o ein festes Material (1) in geteiltem Zustand, das mindestens eine Kohlenwasserstoffverbindung enthält;
o mindestens einen katalytischen Crackkatalysator (10) ;
∘ mindestens eine alkalische Verbindung (20) und
∘ eine gegenüber dem katalytischen Cracken inerte Flüssigkeit (30);
derart erhitzt wird, dass die Crackdispersion (40) eine Temperatur, bezeichnet als Cracktemperatur, zwischen 240 °C und 340 °C erreicht, die imstande ist, ein katalytisches Cracken mindestens einer Kohlenwasserstoffverbindung der Crackdispersion (40) zu gestatten, was zu einer Herstellung von Kohlenwasserstoffen, bezeichnet als kurzkettige Kohlenwasserstoffe (50), mit geringerer Molekularmasse als die Kohlenwasserstoffverbindung führt;
**dadurch gekennzeichnet, dass** die Cracktemperatur durch Mischen einer Menge der Crackdispersion (40) und einer Menge inerter Flüssigkeit (30), die im Wesentlichen ohne festes Material (1) in geteiltem Zustand ist, und Katalysator (10) erreicht wird, wobei die inerte Flüssigkeit auf eine Temperatur unter 360 °C und über der Cracktemperatur gebracht wird, wobei das Mischen derart durchgeführt wird, dass das gebildete Gemisch eine Temperatur erreicht, die mindestens gleich der Cracktemperatur und unter einer Koksbildungstemperatur ist, und dass der Crackdispersion (40) in der Cracktemperatur eine Menge einer sauerstoffhaltigen gasförmigen Zusammensetzung hinzufügt wird, die imstande ist, eine exotherme Reaktion mit mindestens einem Teil des beim Cracken erzeugten Di-Wasserstoffs hervorzurufen.

2. Verfahren nach Anspruch 1, **dadurch gekennzeichnet, dass** ein Trocknungsschritt (3) des festen Materials (1) in geteiltem Zustand durchgeführt wird, bei dem eine Dispersion des festen Materials (1) in geteiltem Zustand in inerter Flüssigkeit auf einer Temperatur über 100 °C derart gehalten wird, dass eine Dispersion eines Materials, bezeichnet als festes trockenes Material (4) in geteiltem Zustand gebildet wird, das einen Feuchtigkeitsgehalt unter 10 % in inerter Flüssigkeit aufweist.

3. Verfahren nach einem der Ansprüche 1 oder 2, **dadurch gekennzeichnet, dass** ein Schritt (7) der Sauerstoffentfernung aus dem festen Material (1) in geteiltem Zustand durchgeführt wird, bei dem eine Dispersion des festen Materials (1) in geteiltem Zustand in inerter Flüssigkeit in Cracktemperatur mit einer gasförmigen Atmosphäre in Kontakt gehalten wird, die einen Sauerstoffpartialdruckwert unter dem Sauerstoffpartialdruck der atmosphärischen Luft derart aufweist, dass eine sauerstoffbereinigte Dispersion (8) des festen Materials (1) in geteiltem Zustand in der inerten Flüssigkeit (30) gebildet wird.

4. Verfahren nach Anspruch 3, **dadurch gekennzeichnet, dass** ein Mischschritt (11) in kontinuierlichem Strom durchgeführt wird, bei dem:
- ein Strom der sauerstoffbereinigten Dispersion (8) des trockenen Materials (4) in der inerten Flüssigkeit (30);
- mindestens ein katalytischer Crackkatalysator (10) ;
- mindestens eine alkalische Verbindung (20) und
- ein Strom inerter Flüssigkeit (30)
derart in Kontakt versetzt und gemischt werden, dass ein Strom der Crackdispersion (40) gebildet wird, der eine Temperatur unter der Cracktemperatur aufweist und in der mindestens ein Katalysator (10) mit mindestens einer Kohlenwasserstoffverbindung des festen Materials (1) in geteiltem Zustand in Kontakt ist.

5. Verfahren nach Anspruch 4, **dadurch gekennzeichnet, dass** ein Strom inerter Flüssigkeit (30) derart erhitzt wird, dass die inerte Flüssigkeit (30) dieses Stroms eine Temperatur über der Cracktemperatur erreicht.

6. Verfahren nach Anspruch 5, **dadurch gekennzeichnet, dass**:
- die Temperatur des Stroms inerter Flüssigkeit (30),
- die Temperatur des Stroms der Crackdispersion (40),
- ein Durchfluss des Stroms inerter Flüssigkeit (30) und
- ein Durchfluss des Stroms der Crackdispersion (40)
derart ausgewählt und eingestellt werden, dass die Temperatur des Gemischs aus der Crackdispersion (40) und der inerten Flüssigkeit (30) eine Temperatur erreicht, die mindestens gleich der Cracktemperatur von mindestens einer Kohlenwasserstoffverbindung des festen Materials in geteiltem Zustand und unter der Koksbildungstemperatur ist.

7. Verfahren nach einem der Ansprüche 1 bis 6, **dadurch gekennzeichnet, dass** die Crackdispersion (40) auf eine Temperatur gebracht wird, die mindestens gleich der Cracktemperatur ist, bei der ein Schaum, bezeichnet als Crackschaum (43), aufgrund der Crackreaktion entsteht, wobei der Crackschaum (43) einem Zentrifugierschritt (16) unterzogen wird, bei dem eine Trennung einer gasförmigen Phase (17) und einer gemischten Feststoff/Flüssigkeit-Zusammensetzung (18) durchgeführt wird, die von einer Dispersion fester Materialien (21) gebildet ist, die aus der Cracken in der inerten Flüssigkeit (30) hervorgegangen sind.

8. Verfahren nach Anspruch 7, **dadurch gekennzeichnet, dass** eine Kondensierung der gasförmigen Phase (17) unter Bedingungen durchgeführt wird, die geeignet sind, die Energieprodukte zu bilden.

9. Verfahren nach einem der Ansprüche 7 oder 8, **dadurch gekennzeichnet, dass** die gemischte Feststoff/Flüssigkeit-Zusammensetzung (18), die aus dem Zentrifugierschritt (16) hervorgegangen ist, einem Flüssigkeit/Feststoff-Trennschritt (19) unterzogen wird, bei dem inerte Flüssigkeit (30) gebildet wird, die im Wesentlichen frei von festen Materialien (21) ist, und dann die inerte Flüssigkeit (30) recycelt wird.

10. Vorrichtung (100, 200) zur Herstellung von Energieprodukten durch katalytisches Cracken eines festen Kohlenwasserstoffmaterials, umfassend:
- eine Kammer, bezeichnet als Crackkammer (106, 206), die ausgebildet ist, um ein Mischen eines Stroms einer gegenüber dem katalytischen Cracken inerten Flüssigkeit und eines Stroms einer Dispersion, bezeichnet als Crackdispersion (40), zu gestatten, umfassend:
∘ ein festes Material in geteiltem Zustand, das mindestens eine Kohlenwasserstoffverbindung enthält;
∘ mindestens einen katalytischen Crackkatalysator und
∘ mindestens eine alkalische Verbindung;
die in inerter Flüssigkeit dispergiert sind;
wobei die Crackkammer (106, 206) aufweist:
▪ einen ersten Einlass (133, 233) des Stroms der Crackdispersion in einer Temperatur unter der katalytischen Cracktemperatur jeder Kohlenwasserstoffverbindung des festen Materials in geteiltem Zustand;
▪ einen zweiten Einlass (130, 230) des Stroms inerter Flüssigkeit in einer Temperatur über der katalytischen Cracktemperatur mindestens einer Kohlenwasserstoffverbindung des festen Materials in geteiltem Zustand;
▪ Mischmittel (134, 272) des Stroms der Crackdispersion und des Stroms der inerten Flüssigkeit in der Crackkammer (106, 206) und
▪ mindestens eine Austrittsöffnung (138, 238) der Crackdispersion in Form eines Schaums, bezeichnet als Crackschaum, umfassend durch katalytisches Cracken gebildete Kohlenwasserstoffe;
- erste Heizmittel (129, 229) des Stroms der Crackdispersion auf eine Temperatur unter der Cracktemperatur;
- zweite Heizmittel (132, 232) des Stroms inerter Flüssigkeit auf eine Temperatur über der katalytischen Cracktemperatur mindestens einer Kohlenwasserstoffverbindung des festen Materials in geteiltem Zustand, und
- mindestens eine Vorrichtung (273, 277) zum Einleiten einer sauerstoffhaltigen gasförmigen Zusammensetzung in die Crackkammer (106).

11. Vorrichtung nach Anspruch 10, **dadurch gekennzeichnet, dass** sie einen einzigen Behälter (101, 201) umfasst, der thermisch isoliert und geeignet ist, ein inertes Flüssigkeitsbad zu enthalten und einschließt:
- die Crackkammer (106, 206);
- mindestens eine Vorrichtung, bezeichnet als Mischleitung (111, 211), zum Inkontaktversetzen und Mischen:
∘ eines Stroms einer Dispersion eines Kohlenwasserstoffmaterials in inerter Flüssigkeit;
∘ mindestens eines Katalysators und
∘ mindestens einer alkalischen Verbindung und
∘ eines Stroms inerter Flüssigkeit, gebildet ausgehend von dem Bad inerter Flüssigkeit;
die geeignet ist, einen Strom der Crackdispersion in einer Temperatur unter der Cracktemperatur zu bilden;
- mindestens ein Flüssigkeit/Feststoff-Trennorgan (151, 281) fester Materialien, die aus dem katalytischen Cracken hervorgegangen sind, und inerter Flüssigkeit;
- eine erste Pumpe (115, 215) zwischen der Mischleitung (111, 211) und der Crackkammer (106, 206), die geeignet ist, den Strom der Crackdispersion in der Crackkammer (106, 206) über die ersten Heizmittel (129, 229) bereitzustellen;
- eine zweite Pumpe (131) zwischen dem Flüssigkeit/Feststoff-Trennorgan (151, 281) und der Crackkammer (106, 206), die geeignet ist, den Strom inerter Flüssigkeit frei von festen Materialien in der Crackkammer (106, 206) über die zweiten Heizmittel (132, 232) bereitzustellen.

12. Vorrichtung nach einem der Ansprüche 10 oder 11, **dadurch gekennzeichnet, dass** sie oberhalb mindestens einer Öffnung (138, 238) der Crackkammer (106, 206) ein Zentrifugierorgan (139, 239) eines Schaums, bezeichnet als Crackschaum, umfasst, der durch katalytische Cracken von mindestens einer Kohlenwasserstoffverbindung des festen Materials in geteiltem Zustand gebildet wird, das geeignet ist, eine gasförmige Phase, die das Energieprodukt enthält, und eine gemischte Feststoff/Flüssigkeit-Zusammensetzung, die von einer Dispersion fester Materialien, die aus dem Cracken in der inerten Flüssigkeit hervorgegangen sind, zu trennen.

13. Vorrichtung nach einem der Ansprüche 10 bis 12, **dadurch gekennzeichnet, dass** sie mit einer Vorrichtung zur Kondensation der kurzkettigen Kohlenwasserstoffe in gasförmigem Zustand und ihrer Umwandlung in flüssiges Energieprodukt ausgestattet ist.

14. Vorrichtung nach einem der Ansprüche 10 bis 13, **dadurch gekennzeichnet, dass** sie eine Presse zum Komprimieren von Haushaltsabfällen mit einem Druck von mindestens gleich 750 bar und zur Extrusion des festen Kohlenwasserstoffmaterials umfasst.

## Claims

1. Process for producing energy products by catalytic cracking of a hydrocarbon solid material, in which a dispersion, named cracking dispersion (40), is heated, said dispersion comprising:
∘ a solid material (1) in divided form containing at least one hydrocarbon-based compound;
∘ at least one catalytic cracking catalyst (10);
∘ at least one alkaline compound (20); and
∘ a liquid (30) which is inert with respect to catalytic cracking;
such that said cracking dispersion (40) reaches a temperature, named cracking temperature, between 240°C and 340°C, which is suitable to allow catalytic cracking of at least one hydrocarbon-based compound of said cracking dispersion (40), leading to a production of hydrocarbons, named short-chain hydrocarbons (50), of lower molecular mass than said hydrocarbon-based compound; **characterized in that** said cracking temperature is reached by mixing an amount of said cracking dispersion (40) and an amount of inert liquid (30) which is substantially free of solid material (1) in divided form and of catalyst (10), the inert liquid being brought to a temperature below 360°C and above said cracking temperature, said mixing being performed such that the mixture formed reaches a temperature at least equal to said cracking temperature and below a coke formation temperature, and **in that** an amount of an oxygenated gaseous composition capable of bringing about an exothermic reaction with at least a portion of the dihydrogen produced during the cracking is supplied to said cracking dispersion (40) at said cracking temperature.

2. Process according to Claim 1, **characterized in that** a step (3) of drying the solid material (1) in divided form is performed, during which a dispersion of the solid material (1) in divided form in inert liquid is maintained at a temperature above 100°C so as to form a dispersion of a solid material, named dry material (4), in divided form having a moisture content of less than 10% in inert liquid.

3. Process according to either of Claims 1 and 2, **characterized in that** a step (7) of deoxygenation of the solid material (1) in divided form is performed, during which a dispersion of the solid material (1) in divided form in liquid which is inert at the cracking temperature is kept in contact with a gaseous atmosphere with an oxygen partial pressure value less than the partial pressure of oxygen of atmospheric air so as to form a deoxygenated dispersion (8) of the solid material (1) in divided form in the inert liquid (30).

4. Process according to Claim 3, **characterized in that** a step (11) of mixing in a continuous stream is performed, in which the following are placed in contact and mixed:
- a stream of the deoxygenated dispersion (8) of said dry material (4) in the inert liquid (30);
- at least one catalytic cracking catalyst (10); and
- at least one alkaline compound (20); and
- a stream of inert liquid (30);
so as to form a stream of said cracking dispersion (40) having a temperature below said cracking temperature, and in which at least one catalyst (10) is in contact with at least one hydrocarbon-based compound of the solid material (1) in divided form.

5. Process according to Claim 4, **characterized in that** a stream of inert liquid (30) is heated so that the inert liquid (30) of this stream reaches a temperature above said cracking temperature.

6. Process according to Claim 5, **characterized in that** the following are chosen and adjusted:
- the temperature of the stream of inert liquid (30),
- the temperature of the stream of said cracking dispersion (40),
- a flow rate of the stream of inert liquid (30), and
- a flow rate of the stream of said cracking dispersion (40);
so that the temperature of the mixture of said cracking dispersion (40) and of the inert liquid (30) reaches a temperature at least equal to the cracking temperature of at least one hydrocarbon-based compound of the solid material in divided form and below the coke formation temperature.

7. Process according to one of Claims 1 to 6, **characterized in that** since said cracking dispersion (40) brought to a temperature at least equal to said cracking temperature forms a foam, named cracking foam (43), due to the cracking reaction, said cracking foam (43) is subjected to a step (16) of centrifugation via which separation is performed of a gaseous phase (17) and of a solid/liquid mixed composition (18) formed from a dispersion of solid matter (21) obtained from the cracking in the inert liquid (30).

8. Process according to Claim 7, **characterized in that** condensation of the gaseous phase (17) is performed under conditions suitable for forming the energy products.

9. Process according to either of Claims 7 and 8, **characterized in that** the solid/liquid mixed composition (18) obtained from the centrifugation step (16) is subjected to a liquid/solid separation step (19) in which inert liquid (30) substantially free of solid matter (21) is formed, and the inert liquid (30) is then recycled.

10. Device (100, 200) for producing energy products by catalytic cracking of a hydrocarbon-based solid material, comprising:
- a chamber, named cracking chamber (106, 206), configured to allow mixing of a stream of a liquid which is inert with respect to catalytic cracking and of a stream of a dispersion, named cracking dispersion (40), comprising:
∘ a solid material in divided form containing at least one hydrocarbon-based compound;
∘ at least one catalytic cracking catalyst; and
∘ at least one alkaline compound;
dispersed in inert liquid;
said cracking chamber (106, 206) having:
▪ a first inlet (133, 233) for the stream of said cracking dispersion at a temperature below the catalytic cracking temperature of each hydrocarbon-based compound of the solid material in divided form;
▪ a second inlet (130, 230) for the stream of inert liquid at a temperature above the catalytic cracking temperature of at least one hydrocarbon-based compound of the solid material in divided form;
▪ means (134, 272) for mixing the stream of said cracking dispersion and of the stream of inert liquid in said cracking chamber (106, 206);
▪ at least one aperture (138, 238) for the escape of said cracking dispersion in the form of a foam, named cracking foam, comprising hydrocarbons formed by catalytic cracking;
- first means (129, 229) for heating the stream of said cracking dispersion to a temperature below the cracking temperature;
- second means (132, 232) for heating the stream of inert liquid to a temperature above the catalytic cracking temperature of at least one hydrocarbon-based compound of the solid material in divided form, and;
- at least one device (273, 277) for introducing an oxygenated gaseous composition into said cracking chamber (106).

11. Device according to Claim 10, **characterized in that** it comprises a single thermally insulated tank (101, 201) suitable for containing a bath of inert liquid and containing:
- said cracking chamber (106, 206);
- at least one device, named mixing pipe (111, 211), for placing in contact and mixing:
∘ a stream of a dispersion of hydrocarbon-based material in inert liquid;
∘ at least one catalyst; and
∘ at least one alkaline compound; and
∘ a stream of inert liquid formed from the bath of inert liquid;
suitable for forming a stream of said cracking dispersion at a temperature below said cracking temperature;
- at least one member (151, 281) for the liquid/solid separation of solid matter obtained from the catalytic cracking and of inert liquid;
- a first pump (115, 215) positioned between said mixing pipe (111, 211) and said cracking chamber (106, 206) and suitable for delivering the stream of said cracking dispersion in said cracking chamber (106, 206) via the first heating means (129, 229);
- a second pump (131) positioned between the liquid/solid separation member (151, 281) and said cracking chamber (106, 206) and suitable for delivering the stream of inert liquid free of solid matter in said cracking chamber (106, 206) via the second heating means (132, 232).

12. Device according to either of Claims 10 and 11, **characterized in that** it comprises, mounted on at least one aperture (138, 238) of said cracking chamber (106, 206), a member (139, 239) for centrifugation of a foam, named cracking foam, formed by catalytic cracking of at least one hydrocarbon-based compound of the solid material in divided form, suitable for separating a gaseous phase containing the energy product and a solid/liquid mixed composition formed from a dispersion of solid matter obtained from the cracking in the inert liquid.

13. Device according to one of Claims 10 to 12, **characterized in that** it is equipped with a device for condensing said short-chain hydrocarbons in gaseous form and for converting them into liquid energy product.

14. Device according to one of Claims 10 to 13, **characterized in that** it comprises a press for compressing household refuse at a pressure at least equal to 750 bar and for extruding the hydrocarbon-based solid material.
